(19) Europäisches Patentamt
European Patent Office
Office européen des brevets

(11) EP 1 930 150 A1

(12) **EUROPEAN PATENT APPLICATION**
published in accordance with Art. 153(4) EPC

(43) Date of publication:
**11.06.2008 Bulletin 2008/24**

(21) Application number: **06783109.9**

(22) Date of filing: **28.08.2006**

(51) Int Cl.:
***B32B 17/10*** *(2006.01)* ***B32B 27/28*** *(2006.01)*
***C03C 27/12*** *(2006.01)*

(86) International application number:
**PCT/JP2006/316880**

(87) International publication number:
**WO 2007/029541 (15.03.2007 Gazette 2007/11)**

(84) Designated Contracting States:
**BE DE FR GB IT NL**

(30) Priority: **01.09.2005 JP 2005253722**
**01.09.2005 JP 2005253726**
**01.09.2005 JP 2005253732**
**01.09.2005 JP 2005253735**

(71) Applicant: **Sekisui Chemical Co., Ltd.**
**Osaka 530-8565 (JP)**

(72) Inventor: **HATTA, Bungo**
**1259, Izumi, Minakuchicho,**
**Koka-shi, Shiga 528-8585 (JP)**

(74) Representative: **Weller, Wolfgang et al**
**Witte, Weller & Partner**
**Patentanwälte**
**Postfach 10 54 62**
**70047 Stuttgart (DE)**

(54) **METHOD FOR PRODUCING LAMINATED GLASS PARTIALLY MADE OF PLASTIC PLATE, AND LAMINATED GLASS**

(57) There is provided a novel laminated glass composed partly of plastic sheet advantageous in light weight property, obtainable by the step of laminating a plastic sheet having the first interlayer film adhered to one side thereof and an inorganic glass sheet having the second interlayer film adhered to one side thereof through the first and second interlayer films interposed therebetween, which warps little, exhibits almost no perspective distortion, exhibits satisfactory adhesion between the plastic sheet and the inorganic glass sheet through the interposed interlayer films, and is excellent in transparency.

EP 1 930 150 A1

## Description

### Technical Field

The present invention relates to a laminated glass composed partly of plastic sheet which is used for windows of automobiles, railway vehicles, ships and buildings, and to a process for producing the same.

### Background Art

When inorganic glass sheet is used as window material of cars, railway vehicles, ships and buildings, laminated glass in which an interlayer film, such as a plasticized polyvinyl butyral resin film, an ethylene-vinyl acetate copolymer resin film, an ethylene-acrylate copolymer resin film and a polyurethane resin film, has been sandwiched between a pair of glass sheets is used for the purposes of enhancing the impact resistance of the window and preventing penetration of colliding objects.
However, such laminated glass using inorganic glass sheets has problems of heavyweight or break occurrence in inorganic glass sheets on impact. For solving such problems, use is made of laminated glass having a structure of plastic sheet/interlayer film/inorganic glass sheet wherein a breakproof plastic sheet, such as polycarbonate sheet and polymethyl methacrylate sheet, is used instead of the inorganic glass sheet in a part of the structure of the laminated glass.
Use of a plasticized polyvinyl butyral resin film as the interlayer film in the aforementioned laminated glass using a plastic sheet may cause problems such as discoloration of the plastic sheet or reduction in transparency thereof due to the effect of a plasticizer. For avoidance of such problems, an ethylene-vinyl acetate copolymer resin film, an ethylene-acrylate copolymer resin film, a polyurethane resin film, and the like, which can be molded easily without use of a placticizer, are chosen as an interlayer film.
For example, patent document 1 discloses the aforementioned laminated glass using plastic sheet as a laminated glass having a construction of inorganic glass/interlayer film (ethylene-vinyl acetate copolymer)/polycarbonate.
A step of laminating a plastic sheet and an inorganic glass sheet through the aforementioned ethylene-vinyl acetate copolymer resin film, ethylene-acrylate copolymer resin film, or polyurethane resin film needs heating-pressuring treatment conducted at temperatures higher than 80°C by the vacuum bag method, the hot-pressing method, the press-rolling method or the autoclave method. In the step, however, the laminated glass resulting from the heating-pressuring treatment will warp due to the difference in coefficient of linear thermal expansion of the plastic sheet and the inorganic glass sheet, after the laminated glass is cooled down to room temperature.
When warp occurs in a laminated glass, a great degree of perspective distortion will occur in the laminated glass, resulting in a problem that objects are seen distorted through the laminated glass.
Patent document 1: Japanese Patent Application Laid-Open No. 11-35349

### Disclosure of the Invention

### Subject to be Solved by the Invention

The present invention solves the above-mentioned problems and intends to provide a novel laminated glass composed partly of plastic sheet advantageous in light weight property wherein the laminated glass warps little, exhibits almost no perspective distortion, exhibits satisfactory adhesion between a plastic sheet and an inorganic glass sheet through an interlayer film, and is excellent in transparency, and to provide a process for producing the same.

### Means for Solving the Subject

The present inventors studied intensively in order to attain the above-mentioned problems, and found that the following three means are effective for solving the aforementioned problems.
They found that, as first means, when a laminated glass is produced by laminating a plastic sheet having the first interlayer film adhered to one side thereof and an inorganic glass sheet having the second interlayer film adhered to one side thereof through the first and second interlayer films, there was obtained a laminated glass which has no warp and can solve the conventional problems at once. Moreover, they found in this means that transparency is improved by causing the first and second layer films to have each a ten-point average surface roughness of not more than 10 μm.
They also found that, as second means, by thermocompression bonding a plastic sheet and an inorganic glass sheet through an interlayer film at a temperature exceeding 80°C but being less than 150°C and then cooling the heated plastic sheet and inorganic glass sheet down to 60°C at a mean cooling rate of 30°C/min to 500°C/min, there can be produced a laminated glass warping little and free of perspective distortion.
Furthermore, they found that, as third means, by thermocompression bonding a plastic sheet and an inorganic glass sheet through an interlayer film having an average thickness more than 2.0 mm but less than 5.0 mm at a temperature exceeding 80°C but being less than 150°C, there was obtained a laminated glass which warps little and which is almost free of perspective distortion and excellent in adhesion between the plastic sheet and the inorganic glass sheet through the interlayer film and in transparency.

The present inventors further investigated each of the above-mentioned findings to accomplish the present invention.

That is, the invention relates to:

(1) a process for producing a laminated glass, which comprises the step of laminating a plastic sheet having the first interlayer film adhered to one side thereof and an inorganic glass sheet having the second interlayer film adhered to one side thereof through the interposed first and second interlayer films;

(2) the process for producing a laminated glass according to claim 1, wherein each of the first and second interlayer films has a ten-point average surface roughness of not more than 10 $\mu$m.

(3) the process for producing a laminated glass according to the above (1) or (2), wherein the step of laminating is carried out at a temperature not exceeding 80°C;

(4) the process for producing a laminated glass according to any one of the above (1) to (3), wherein the inorganic glass sheet having the second interlayer film adhered to one side thereof is produced by adhering an inorganic glass sheet, in which a silane coupling agent is coated to one side thereof, to the second interlayer film through the interposed silane coupling agent;

(5) the process for producing a laminated glass according to any one of the above (1) to (4), wherein each of the first and second interlayer films is a thermoplastic elastomer resin film;

(6) the process for producing a laminated glass according to the above (5), wherein the thermoplastic elastomer resin film is an ethylene-vinyl acetate copolymer resin film;

(7) the process for producing a laminated glass according to the above (6), wherein the vinyl acetate content in the ethylene-vinyl acetate copolymer resin constituting the ethylene-vinyl acetate copolymer resin film is 20 to 40% by weight as measured in accordance with JIS K6730 entitled "Testing method for ethylene-vinyl acetate resin";

(8) the process for producing a laminated glass according to the above (6) or (7), wherein the silane coupling agent is contained in an amount of 0.01 to 4 parts by weight based on 100 parts by weight of the ethylene-vinyl acetate copolymer resin film;

(9) the process for producing a laminated glass according to any one of the above (6) to (8), wherein a tackifier is contained in an amount of 1 to 40 parts by weight based on 100 parts by weight of the ethylene-vinyl acetate copolymer resin film;

(10) the process for producing a laminated glass according to any one of the above (6) to (9), wherein a nucleating agent is contained in an amount of 0.01 to 4 parts by weight based on 100 parts by weight of the ethylene-vinyl acetate copolymer resin film;

(11) the process for producing a laminated glass according to the above (5), wherein the thermoplastic elastomer resin film is an ethylene-acrylate copolymer resin film;

(12) the process for producing a laminated glass according to the above (11), wherein the ethylene-acrylate copolymer resin film is one member selected from the group consisting of ethylene-methyl acrylate copolymer resin, ethylene-ethyl acrylate copolymer resin and ethylene-butyl acrylate copolymer resin films;

(13) the process for producing a laminated glass according to the above (5), wherein the thermoplastic elastomer resin film is a thermoplastic polyurethane resin film which may contain sulfur element;

(14) the process for producing a laminated glass according to the above (5), wherein the thermoplastic elastomer resin film is a plasticized polyvinyl acetal resin film;

(15) the process for producing a laminated glass according to any one of the above (1) to (14), wherein the plastic sheet has a coefficient of linear thermal expansion of not less than $5\times10^{-5}$ cm/cm·°C but not more than $10\times10^{-5}$ cm/cm·°C;

(16) the process for producing a laminated glass according to any one of the above (1) to (14), wherein the plastic sheet is a polycarbonate sheet and a coefficient of linear thermal expansion of the polycarbonate sheet is not less than $5x10^{-5}$ cm/cm·°C but not more than $8\times10^{-5}$ cm/cm·°C;

(17) the process for producing a laminated glass according to any one of the above (1) to (14), wherein the plastic sheet is a polymethyl methacrylate sheet and the coefficient of linear thermal expansion of the polymethyl methacrylate sheet is not less than $5\times10^{-5}$ cm/cm·°C but not more than $10\times10^{-5}$ cm/cm·°C;

(18) the process for producing a laminated glass according to any one of the above (1) to (17), wherein the coefficient of linear thermal expansion of the inorganic glass sheet is not less than $0.01\times10^{-6}$ cm/cm·°C but not more than $100\times10^{-6}$ cm/cm·°C; and

(19) a laminated glass which is produced by the process according to any one of the above (1) to (18).

Further, the present invention relates to:

(20) a process for producing a laminated glass which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by thermocompression bonding, down to 60°C at an average cooling rate of not less than 30°C/min but not more than 500°C/min;
(21) a process for producing a laminated glass, which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by thermocompression bonding, down to 50°C at an average cooling rate of not less than 30°C/min but not more than 500°C/min;
(22) a process for producing a laminated glass, which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by the thermocompression bonding, down to 40°C at an average cooling rate of not less than 30°C/min but not more than 500°C/min;
(23) the process for producing a laminated glass according to any one of the above (20) to (22), wherein the interlayer film is a thermoplastic elastomer resin film;
(24) the process for producing a laminated glass according to the above (23), wherein the thermoplastic elastomer resin film is a thermoplastic elastomer resin film having an average film thickness exceeding 2.0 mm but being less than 5.0 mm;
(25) the process for producing a laminated glass according to the above (23) or (24), wherein the thermoplastic elastomer resin film is an ethylene-vinyl acetate copolymer resin film;
(26) the process for producing a laminated glass according to the above (25), wherein the step of cooling at an average cooling rate of not less than 30°C/min but not more than 500°C/min comprises a step of cooling the plastic sheet and the inorganic glass sheet heated by thermocompression bonding, over the range from a temperature 10°C higher than the extrapolated end temperature of crystallization as measured in accordance with JIS K 7121 (1987) of the interlayer film resin, to a temperature 10°C lower than the extrapolated onset temperature of crystallization as measured in accordance with JIS K7121 (1987) at an average cooling rate of not less than 50°C/min but not more than 500°C/min;
(27) the process for producing a laminated glass according to the above (23) or (24), wherein the thermoplastic elastomer resin film is an ethylene-acrylate copolymer resin film;
(28) the process for producing a laminated glass according to the above (23) or (24), wherein the thermoplastic elastomer resin film is a polyurethane resin film which may contain sulfur element; and
(29) a laminated glass which is produced by the process according to any one of the above (20) to (28).
Furthermore, the present invention relates to:
(30) a laminated glass comprising a plastic sheet and an inorganic glass sheet, which are laminated through an interposed interlayer film by thermocompression bonding, wherein said interlayer film has an average thickness exceeding 2.0 mm but being less than 5.0 mm and the temperature at which the thermocompression bonding is carried out is higher than 80°C but less than 150°C;
(31) the laminated glass according to the above (30), wherein the interlayer film is a thermoplastic elastomer resin film;
(32) the laminated glass according to the above (31), wherein the thermoplastic elastomer resin film is an ethylene-vinyl acetate copolymer resin film;
(33) the laminated glass according to the above (31), wherein the thermoplastic elastomer resin film is an ethylene-acrylate copolymer resin film; and
(34) the laminated glass according to the above (31), wherein the thermoplastic elastomer resin film is a polyurethane resin film which may contain sulfur element.

Effect of the Invention

According to the present invention, there is provided a lightweight laminated glass composed partly of plastic sheet, which warps little and therefore exhibits so little perspective distortion that the laminated glass has superior visibility and which is a laminated glass including a highly transparent combination of a plastic sheet and an inorganic glass sheet laminated through an interlayer film interposed therebetween and being superior in transparency.
The laminated glass obtained according to the present invention is useful as a windowpane to be installed for buildings, automobiles, railway vehicles, airplanes, ships, etc., and particularly suitable as a windowpane of buildings.

Best Mode for Carrying Out the Invention

The present invention will be described in more detail below.
Among the processes for producing a laminated glass according to the present invention, explanation is first made on the production process comprising a step of laminating a plastic sheet having the first interlayer film adhered to one side thereof and an inorganic glass sheet having the second interlayer film adhered to one side thereof through the interposed first and second interlayer films. Hereinafter, this process is also referred to as "first production process."

In the first production process, the first interlayer film and the second interlayer film may be interlayer films made of either the same materials or different materials if satisfactory adhesion is attained at the interface of the interlayer films. When the first interlayer film and the second interlayer film are made of the same materials, it is easy to handle them because they show the same thermal behavior during heat treatment and therefore no significant difference will occur between their fluidities.

As a method of adhering the first interlayer film to one side of a plastic sheet, conventionally known methods such as the vacuum bag method where heating and pressuring treatment is carried out in a rubber vacuum bag, the hot-pressing method, the press-rolling method and the autoclave method may be used.

The temperature at which the first interlayer film is adhered to one side of a plastic sheet is preferably within a temperature range of 50°C to 150°C. If the temperature is lower than 50°C, adhesion between the first interlayer film and the plastic sheet may be insufficient. If the temperature is higher than 150°C, the plastic sheet deforms easily and the fluidity of the interlayer film is so high that the dimension stability of the interlayer film may be poor.

Regarding the pressure applied when the first interlayer film is adhered to one side of a plastic sheet, it is desirable that a pressure of 1 kgf/cm$^2$ to 100 kgf/cm$^2$ be applied uniformly to both sides of a laminated assembly composed of the first interlayer film and the plastic sheet adhered together except for the case of using the vacuum bag method. When the pressure is less than 1 kgf/cm$^2$, there is a fear that the adhesion between the plastic sheet and the first interlayer film may become poor. When the surface of the first interlayer film is provided with an embossed pattern, embossed marks may remain. When the pressure is more than 100 kgf/cm$^2$, the plastic sheet may deform.

As a method of adhering the second interlayer film to one side of an inorganic glass sheet, conventionally known methods such as the vacuum bag method where heating and pressuring treatment is carried out in a rubber vacuum bag, the hot-pressing method, the press-rolling method and the autoclave method may be used.

The temperature at which a second interlayer film is adhered to one side of an inorganic glass sheet is preferably within a temperature range of 80°C to 150°C. If the temperature is lower than 80°C, adhesion between the second interlayer film and the inorganic glass sheet may be insufficient. If the temperature is higher than 150°C, the fluidity of the interlayer film will be so high that the dimension stability of the interlayer film may become poor.

Regarding the pressure applied when the second interlayer film is adhered to one side of an inorganic glass sheet, it is desirable that a pressure of 1 kgf/cm$^2$ to 100 kgf/cm$^2$ be applied uniformly to both sides of a laminated assembly composed of the second interlayer film and the inorganic glass sheet adhered together except for the case of using the vacuum bag method. If the pressure is lower than 1 kgf/cm$^2$, adhesion between the inorganic glass sheet and the second interlayer film may be insufficient. When the surface of the second interlayer film is provided with an embossed pattern, embossed marks may remain. When the pressure is more than 100 kgf/cm$^2$, cracks or clefts may be formed in the inorganic glass sheet.

As a method of laminating and stacking a plastic sheet having the first interlayer film adhered on one side thereof and an inorganic glass sheet having the second interlayer film adhered on one side thereof through the interposed first and second interlayer films, there may be employed conventionally known methods such as the vacuum bag method where heating and pressuring treatment is carried out in a rubber vacuum bag, the hot-pressing method, the press-rolling method and the autoclave method.

The temperature during the lamination is preferably a temperature not exceeding 80°C, and more preferably from room temperature (about 20°C) to 80°C. When the temperature is higher than 80°C, there is a tendency that the amount of warp of the resulting laminated glass becomes large. Still more preferable temperature is from room temperature to 50°C, and most preferably is from room temperature to 40°C.

Regarding the pressure applied during the lamination, it is desirable that a pressure of 1 kgf/cm$^2$ to 100 kgf/cm$^2$ be applied uniformly to both sides of a laminated glass except for the case of using the vacuum bag method. When the pressure is less than 1 kgf/cm$^2$, the adhesion between the first interlayer film and the second interlayer film may become poor. Further, when the surface of the first interlayer film and/or the surface of the second interlayer film is provided with an embossed pattern, the embossed marks may remain. If the pressure is more than 100 kgf/cm$^2$, the plastic sheet may deform, or cracks or clefts may be formed in the inorganic glass.

The construction of a laminated glass is not restricted to a structure like plastic sheet/interlayer film layer/inorganic glass sheet. Further, it is possible to dispose inorganic glass sheets as both outermost layers like inorganic glass sheet/interlayer film layer/plastic sheet/interlayer film layer/inorganic glass sheet. The disposing of inorganic glass sheets as the outermost layers makes the laminated glass excellent in abrasion resistance, scratch resistance, chemical resistance, light resistance and moisture resistance.

When using a construction like plastic sheet/interlayer film layer/inorganic glass sheet, there is no particular limitation regarding which of the plastic sheet and the inorganic glass sheet is located on the indoor side and which one is located on the outdoor side, and any choice is allowed depending on the intended applications.

In addition to plastic sheets, interlayer film layers and inorganic glass sheets, one or more additional layers may be provided. Examples of such layers include a primer layer for enhancing the adhesion between an inorganic glass and an interlayer film, a primer layer for enhancing the adhesion between a plastic sheet and an interlayer film, an ultraviolet absorbing layer containing an ultraviolet absorber, a flame retardant layer for preventing a laminated glass from burning, a decoration layer with various patterns printed, an infrared (heat rays) reflecting layer and a polyester film layer aiming at the improvement in penetration resistance. Such layers may be provided at any desired location, namely, on a plastic sheet, on an interlayer film layer or on an inorganic glass sheet, by conventional methods.

As a primer layer for enhancing the adhesion between an inorganic glass sheet and an interlayer film, conventionally known ingredients are appropriately used. In particular, silane coupling agents are suitably used. Such silane coupling agents are not particularly restricted, and examples of the silane coupling agents include 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane and vinyltrimetoxysilane. These silane coupling agents may be used singly or in two or more combinations thereof. Further, they may be used after being diluted with an organic solvent.

Examples of the first interlayer film and the second interlayer film used in the present invention include thermoplastic elastomer resin films such as ethylene-vinyl acetate copolymer resin films, ethylene-acrylate copolymer resin films, polyurethane resin films which may contain sulfur element and plasticized polyvinyl acetal resin films.

When the first interlayer film and the second interlayer film are adhered together, there is no need for the whole of the first interlayer film or the whole of the second interlayer film to have fluidity. However, the interlayer films are required to have fluidities such that satisfactory adhesion is achieved in the vicinity of the interface where they are in contact.

The first interlayer film and/or the second interlayer film used in the present invention may be provided with an embossed pattern on their surfaces for the purpose of improvement in handleability. Not only when the surfaces are provided with an embossed pattern but also when the surface of the first interlayer film and/or the second interlayer film has an undulating shape, projecting portions of the undulation will remain and therefore the transparency of the laminated glass obtained may be reduced. For this reason, the first interlayer film and the second interlayer film of the present invention preferably have a surface roughness in their surfaces where the films are to be adhered and adhered together, expressed by an average roughness measured in accordance with JIS B0601, of 10 μm or less.

If the surface roughness at the time of adhering is greater than 10 μm, satisfactory adhesion is not achieved in the step of adhering the first and second interlayer films together and therefore the transparency of a laminated glass may be reduced.

In the case where the surface roughness is 10 μm or less, even when the first interlayer film and the second interlayer film are adhered together at a low temperature of normal temperature to 80°C or when a plasticized polyvinyl acetal resin is used as interlayer film resin, the first and second interlayer films are more securely adhered, resulting in improvement of the transparency of the laminated glass. The surface tension is more preferably 5 μm or less, and still more preferably 3 μm or less.

When a surface of the first interlayer film and a surface of the second interlayer film are provided with embossed patterns having a coarse surface roughness for the purpose of enhancing the handleability, the surfaces of the interlayer films can be smoothened by lamination of release PET films or the like with a smooth surface profile onto the surfaces of the interlayer films, followed by heat pressing treatment.

The aforementioned ethylene-vinyl acetate copolymer resin film may be either a non-crosslinked type ethylene-vinyl acetate copolymer resin film or a high temperature crosslinked type ethylene-vinyl acetate copolymer resin film. Further, there may also be used modified ethylene-vinyl acetate resins such as saponified ethylene-vinyl acetate copolymer and hydrolyzed ethylene vinyl acetate.

The ethylene-vinyl acetate copolymer resin constituting the aforementioned ethylene-vinyl acetate copolymer resin film preferably has a vinyl acetate content of 20 to 40% by weight, as measures in accordance with JIS K6730 "Testing method for ethylene-vinyl acetate resin". If the vinyl acetate content is less than 20% by weight, the resulting interlayer film will become so hard that adhesion to glass or resistance to penetration of the laminated glass tends to become poor. If the vinyl acetate content exceeds 40% by weight, the resulting interlayer film tends to have insufficient breaking strength and impact resistance of the laminated glass may be insufficient.

The aforementioned ethylene-vinyl acetate copolymer resin film may contain an adhesion regulator unless effects of the present invention are affected. Silane coupling agents are suitably used as an adhesion regulator. Although there is no particular limitation to such silane coupling agents, examples of the coupling agents include 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane and vinyltrimetoxysilane. These silane coupling agents may be used singly or in two or more combinations thereof.

The addition amount of the silane coupling agent used as the aforementioned adhesion regulator is preferably from 0.01 to 4 parts by weight based on 100 parts by weight of the ethylene-vinyl acetate copolymer resin film. If the amount of the silane coupling agent to be added is less than 0.01 part by weight, sufficient effect may not be obtained.

If the amount of the silane coupling agent added exceeds 4 parts by weight, the strength of the resulting interlayer film tends to become poor.

The aforementioned ethylene-vinyl acetate copolymer resin film may contain a tackifier unless effects of the present invention are affected. Although there is no particular limitation to such tackifier, it includes, for example, wood rosin, gum rosin, tall oil rosin, hydrogenated rosin, disproportionated rosin, disproportionated hydrogenated rosin, esterified rosin, rosin metal chloride, polymerized rosin, aliphatic petroleum resin, aromatic petroleum resin, alicyclic petroleum resin, copolymerized petroleum resin, hydrogenated petroleum resin and pure monomer petroleum resin can be suitably used. Such tackifiers may be used singly or in two or more combinations thereof.

The addition amount of the aforementioned tackifier is preferably from 1 to 40 parts by weight based on 100 parts by weight of the ethylene-vinyl acetate copolymer resin film. If the amount of the tackifier added is less than 1 part by weight, a sufficient effect may not be obtained. If the amount of the tackifier to be added exceeds 40 parts by weight, the transparency of the resulting interlayer film tends to become poor.

The aforementioned ethylene-vinyl acetate copolymer resin film may contain a nucleating agent for the purpose of improving the transparency of the interlayer film. Such nucleating agent is not particularly restricted, and includes, for example, dibenzylidene sorbitol, dibenzylidene xylitol, dibenzylidene dulcitol, dibenzylidene mannitol and calixarene can be suitably used. These nucleating agents may be used singly or in two or more combinations thereof.

The addition amount of the aforementioned nucleating agent is preferably from 0.01 to 4 parts by weight based on 100 parts by weight of the ethylene-vinyl acetate copolymer resin film. If the amount of the nucleating agent to be added is less than 0.01 part by weight, sufficient effect may not be obtained. If the amount of the nucleating agent to be added exceeds 4 parts by weight, the nucleating agent may form crystals in the interlayer film.

In the aforementioned ethylene-vinyl acetate copolymer resin film may further contain heat stabilizers, antioxidants, UV absorbers, pigments, dyes, infrared (heat rays) absorbers, moisture resistance improvers, antiblocking agents, flame retardants and antistatic agents unless effects of the present invention are affected.

As a method for producing the aforementioned ethylene-vinyl acetate copolymer resin film, conventionally known methods may be used. For example, it is possible to form a resin film by compounding predetermined amounts of additives like those mentioned above to an ethylene-vinyl acetate copolymer and kneading the mixture uniformly, followed by the calender roll process, the extrusion sheet casting process, the inflation tube process, or the like.

The thickness of the interlayer composed of the aforementioned ethylene-vinyl acetate copolymer resin film, which may be determined according to its applications, is generally from 0.2 to 2 mm.,

If the thickness of the interlayer composed of the aforementioned ethylene-vinyl acetate copolymer resin film is less than 0.2 mm, the laminated glass obtainedmay be insufficient in impact resistance and resistance to penetration of colliding objects. If the thickness exceeds 2 mm, the transparency of the laminated glass obtained tends to decrease.

The ethylene-vinyl acetate copolymer resin film may have polar groups which are introduced on its surface by corona treatment, plasma treatment or the like for the purpose of improving adhesion with inorganic glass sheets.

As the aforementioned ethylene-acrylate copolymer resin film, there can be used an ethylene-methyl acrylate copolymer resin film, an ethylene-ethyl acrylate copolymer resin film, ethylene-butyl acrylate copolymer resin film, and the like may be used. Like the aforementioned ethylene-vinyl acetate copolymer resin film, the ethylene-acrylate copolymer resin may contain conventionally known additives.

The above-mentioned thermoplastic polyurethane resin film which may contain sulfur element may be a thermoplastic polyurethane resin film or a thermoplastic polyurethane resin film containing sulfur element. Examples of the thermoplastic polyurethane resin film containing sulfur element include sulfur-containing polyurethane resin films obtainable by polymerizing polyisocyanate, polythiol and/or sulfur-containing polyol. Like the aforementioned ethylene-vinyl acetate copolymer resin film, the polyurethane resin film containing sulfur element may contain conventionally known additives.

The plasticized polyvinyl acetal resin film may be a polyvinyl acetal resin film obtained by plasticizing a polyvinyl acetal resin with a known plasticizer in a conventional method. Such polyvinyl acetal resin is not particularly restricted, and polyvinyl acetal resins having been used conventionally as interlayer film resin for laminated glass may be used. For example, polyvinyl acetal resin with a degree of acetalization of 60 to 75 mol% and a degree of polymerization of 800 to 3000 are suitably used. If the degree of polymerization is less than 800, the resin film may be so weak that a laminated glass produced by using the film will have a reduced penetration resistance. If the degree of polymerization exceeds 3000, formability of the resin film becomes difficult or the film obtained may be so strong that the laminated glass produced by using the film will have a reduced impact absorbing property. In particular, polyvinyl butyral resin is preferred from the viewpoints of proper adhesion to glass, excellent transparency and excellent weatherability.

The polyvinyl acetal resin can be prepared by acetalizing polyvinyl alcohol with aldehyde. The polyvinyl alcohol is usually prepared by saponifying polyvinyl acetate. Polyvinyl alcohol with a degree of saponification of 80 to 99.8 mol% is generally used.

The viscosity average degree of polymerization of the above-mentioned polyvinyl alcohol resin is preferably from 200 to 3000. If the viscosity average degree of polymerization is less than 200, the resultant laminated glass may have a reduced penetration resistance, whereas if it exceeds 3000, the formability of a resin film will become poor and the resultant resin film will have too high a rigidity, and may have, therefore, a poor processability. The viscosity average degree of polymerization is more preferably from 500 to 2000. The viscosity average degree of polymerization and the degree of saponification of a polyvinyl alcohol resin can be measured in accordance with, for example, JIS K6726 "Testing method for polyvinyl alcohol."

The aldehyde is not particularly restricted, and in general, aldehydes having from 1 to 10 carbon atom(s) may be used. Examples of such aldehydes include n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde and benzaldehyde, etc. are mentioned. Among them, n-butylaldehyde, n-hexylaldehyde and n-valeraldehyde are suitably used. Particularly, butylaldehyde having 4 carbon atoms is preferred.

Any plasticizers which are usually used for polyvinyl acetal resin may be used as the above-mentioned plasticizer without any particular limitations. Conventionally known plasticizers which are usually used as a plasticizer for interlayer films may be used. Examples of such plasticizers include organic plasticizers such as monobasic organic acid esters and polybasic organic acid esters; and phosphoric acid-based plasticizers such as organic phosphoric acid-based plasticizers and organic phosphorous acid-based plasticizers. These plasticizers may be used singly or in two or more combinations thereof. Taking into consideration of the compatibility with resins, the plasticizers are properly used depending on the kind of the polyvinyl acetal resin used.

The above-mentioned monobasic organic acid ester type plasticizers are not particularly restricted and may include, for example, glycol-based esters resulting from the reaction between a glycol (e.g. triethylene glycol, tetraethylene glycol, tripropylene glycol, etc.) and a monobasic organic acid (e.g. butyric acid, isobutyric acid, caproic acid, 2-ethylbutyric acid, heptylic acid, n-octylic acid, 2-ethylhexylic acid, pelargonic acid (n-nonylic acid), decylic acid, etc.). Particularly, monobasic organic acid esters of triethylene glycols, such as triethylene glycol-dicaproic acid ester, triethylene glycol-di-2-ethylbutyric acid ester, triethylene glycol-di-n-octylic acid ester and triethylene glycol-di-2-ethylhexylic acid ester, are suitably used.

The above-mentioned polybasic organic acid ester type plasticizers are not particularly restricted and may include, for example, esters prepared from polybasic organic acids (e.g. adipic acid, sebacic acid or azelaic acid) and linear or branched chain alchols each having 4 to 8 carbon atoms. Particularly, dibutylsebacic acid esters (e.g., triethylene glycol di-butylsebacate, etc.), dioctylazelaic acid esters, dibutylcarbitol adipic acid esters, and the like are suitably used.

The above-mentioned organic phosphoric acid-based plasticizers are not particularly restricted and may include, for example, tributoxyethyl phosphate, isodecylphenyl phosphate, triisopropyl phosphate, etc.

As the above-mentioned plasticizer, triethylene glycol-di-2-ethyl butyrate, triethylene glycol-di-2-ethylhexoate, triethylene glycol-di-butylsebacate, and the like are preferably used.

The amount of the aforementioned plasticizer to be compounded is preferably from 20 to 60 parts by weight based on 100 parts by weight of the polyvinyl acetal resin. When the amount of the plasticizer is less than 20 parts by weight, the resulting interlayer film or laminated glass may have an insufficient impact absorbing property, whereas it exceeds 60 parts by weight, the plasticizer will bleed out and, as a result, the resultant interlayer film or laminated glass may have a large optical strain, or the transparency or the adhesion between glass and the interlayer film may be damaged. The amount of the plasticizer is more preferably from 30 to 50 parts by weight.

The above-mentioned plasticized polyvinyl acetal resin film preferably further contains a phosphoric acid ester.

Such phosphoric acid ester includes, for example, trialkyl phosphate, trialkoxyalkyl phosphate, triallyl phosphate and alkyl allyl phosphate.

Regarding the content of the phosphoric acid ester, its lower limit is preferably 0.005 part by weight and its upper limit is preferably 2 parts by weight, based on 100 parts by weight of the polyvinyl acetal resin. If it is less than 0.005 part by weight, an effect of improving moisture resistance may not be achieved sufficiently, whereas if it is more than 3 parts by weight, the adhesion with glass tends to be too low. More preferable lower limit and more preferable upper limit are 0.01 part by weight and 2 parts by weight, respectively.

Interlayer films used for the present invention may have either a single layer structure or a multiple layer structure having two or more layers.

The aforementioned interlayer films may further contain heat stabilizers, antioxidants, adhesion regulators, UV absorbers, pigments, dyes, infrared (heat rays) absorbers, moisture resistance improvers, antiblocking agents, flame retardants and antistatic agents unless effects of the present invention are affected.

The interlayer films may havepolar groups which are introduced on their surfaces by corona treatment, plasma treatment or the like for the purpose of improving adhesion with inorganic glass sheets.

The inorganic glass sheet used in the present invention is not particularly restricted and may include, for example, float sheet glass, tempered glass, heat-strengthened glass, polished sheet glass, figured sheet glass, meshed sheet glass, wired sheet glass, colored sheet glass, ultraviolet absorbing sheet glass, infrared (heat rays) reflective sheet glass, infrared (heat rays) absorbing sheet glass, and the like, which are used for the usual laminated glass. The thickness and shape of the inorganic glass sheet are not particularly restricted and may be chosen depending on its application.

The coefficient of linear thermal expansion of the inorganic glass sheet used in the present invention is usually from $0.01\times10^{-6}$ cm/cm·°C to $100\times10^{-6}$ cm/cm·°C.

Examples of the plastic sheet used in the present invention include polycarbonate sheet, polymethyl methacrylate sheet, acrylonitrile-styrene copolymer sheet, acrylonitrile-butadiene-styrene copolymer sheet, polyester sheet, fluororesin sheet, polyvinyl chloride sheet, chlorinated polyvinyl-chloride sheet, polypropylene sheet, polystyrene sheet, polysulfone sheet, epoxy resin sheet, phenol resin sheet, unsaturated polyester resin sheet, polyimide resin sheet, and the like.

Among the above-mentioned plastic sheets, polycarbonate sheet is preferably used because it is excellent in transparency, impact resistance and combustion resistance.

On the surface of a polycarbonate sheet, a surface protection layer, such as silicone-based hard coat, may be formed for the purpose of improving abrasion resistance, scratch resistance, chemical resistance, light resistance, etc. The thickness and shape of the polycarbonate sheet are not particularly restricted and may be chosen depending on its application.

The aforementioned polycarbonate sheet is hygroscopic and the water adsorbed thereto will form bubbles on heat to affect the transparency or appearance of a laminated glass. It is, therefore, desirable to remove moisture in a polycarbonate sheet by heating at 80 to 125°C for about 1 to 10 hours before adhering the polycarbonate sheet to the first interlayer film.

As the plastic sheet, a polymethyl methacrylate sheet, which has high transparency and is excellent in weatherability and mechanical properties, is suitably used.

On the surface of a polymethyl methacrylate sheet, a surface protection layer may be formed for the purpose of improving abrasion resistance, scratch resistance, chemical resistance, light resistance, etc. The thickness and shape of the polymethyl methacrylate sheet are not particularly restricted and may be chosen depending on its application.

The aforementioned polymethyl methacrylate sheet is hygroscopic and the water adsorbed thereto will form bubbles on heat to affect the transparency or appearance of a laminated glass. It is, therefore, desirable to remove moisture in a polymethyl methacrylate sheet by heating at 80 to 125°C for about 1 to 10 hour (s) before adhering the polymethyl methacrylate sheet to the first interlayer film.

The coefficient of linear thermal expansion of the plastic sheet is preferably from $5\times10^{-5}$ cm/cm- °C to $10\times10^{-5}$ cm/cm·°C. More specifically, in the case where the plastic sheet is a polycarbonate sheet, the coefficient of linear thermal expansion of the polycarbonate sheet is preferably from $5x10^{-5}$ cm/cm·°C to $8\times10^{-5}$ cm/cm·°C. In addition, when the plastic sheet is a polymethylmethacrylate sheet, the coefficient of linear thermal expansion of the polymethyl methacrylate sheet is preferably from $5\times10^{-5}$ cm/cm·°C to $10\times10^{-5}$ cm/cm·°C.

By the first production process explained above, a transparent laminated glass composed partly of plastic sheet can be produced which is less warped and has excellent visibility and satisfactory adhesion. The laminated glass produced by use of the first production process is also one of the present invention.

Next, among the processes for producing a laminated glass according to the present invention, a detailed explanation is made to a process comprising a step of thermocompression bonding aplastic sheet and an inorganic glass sheet through an interlayer film interposed therebetween at a temperature higher than 80°C but lower than 150°C and a step of cooling the plastic sheet and the inorganic glass sheet heated by thermocompression bonding to 60°C at an average cooling rate of 30°C/min to 500°C/min. This process is hereinafter sometimes referred to as "second production process."

In the second production process, a plastic sheet and an inorganic glass sheet are thermocompression bonded through an interlayer film interposed therebetween at a temperature higher than 80°C but lower than 150°C and are then cooled in such a manner that an average cooling rate used during the course from the highest ultimate temperature in the thermocompression bonding treatment to 60°C falls within a range of from 30°C/min to 500°C/min.

The method of laminating and stacking a plastic sheet, an interlayer film and an inorganic glass sheet is not particularly restricted and there may be employed conventionally known methods used in the production of laminated glass, such as the vacuum bag method, the hot-pressing method, the press-rolling method and the autoclave method.

In the second production process, the temperature required for the thermocompression bonding of a laminated glass is higher than 80°C but lower than 150°C. When the thermocompression bonding is conducted at a low temperature not exceeding 80°C, the adhesion between the interlayer film and the inorganic glass will become poor and delamination will occur in the resulting laminated glass. Further, an embossed pattern on the surface of an interlayer film formed in order to prevent the film from blocking caused by self-sticking of the film will remain due to failure to be smoothened well, resulting in that the transparency of the resulting laminated glass will become poor. When the temperature is 150°C or higher, a large amount of warp will occur in the resulting laminated glass, resulting in occurrence of a large transmission distortion. In addition, the fluidity of the interlayer film will become so high that the dimension stability of the interlayer film may become poor. A more desirable temperature range is from 90°C to 140°C.

In the second production process, the average cooling rate until arrival at 60°C after the thermocompression bonding of a laminated glass is from 30°C/min to 500°C/min. If the average cooling rate is less than 30°C /min, the laminated glass cooled to room temperature will have a large amount of warp, and thus the resulting laminated glass will have a large perspective distortion. If the average cooling rate exceeds 500°C/min, delamination between the interlayer film and the inorganic glass may occur. In the present invention, the average cooling rate after the thermocompression bonding of a laminated glass is preferably from 30°C/min to 500°C/min until 50°C and from 30°C/min to 500°C/min until 40°C.

In the case where the interlayer film is an ethylene-vinyl acetate copolymer resin film, crystallization of ethylene moieties may occur during the process of cooling a laminated glass, resulting in decrease in transparency of the ethylene-vinyl acetate copolymer resin film and increase in haze of the resin film. In order to prevent this phenomenon, it is preferable to cool a laminated glass at an average cooling rate of 50°C/min to 500°C/min, and more preferably at an average cooling rate of 100°C/min to 500°C/min from a temperature 10°C higher than the extrapolated end temperature (Tec) of crystallization of the interlayer film resin to a temperature 10°C lower than the extrapolated onset temperature (Tic) of crystallization of the interlayer film resin.

The extrapolated end temperature of crystallization (Tec) and the extrapolated onset temperature of crystallization (Tic) of the ethylene-vinyl acetate copolymer resin film mean temperatures based on the crystallization of ethylene moieties observed as an exothermic peak when cooled at a cooling rate of 5°C/min using a differential scanning calorimeter (DSC) in accordance with JIS K7121 (1987) "Testing method for transition temperatures of plastics."

The average cooling rate shall be calculated from the formula provided below when the temperature drops from $T_1$ to $T_2$ during a period of time from a time $t_1$ to a time $t_2$, provided that a case of being maintained at a certain temperature is excluded:

$$\text{Average cooling rate} = -(T_2 - T_1)/(t_2 - t_1)$$

Means for making the average cooling rate fall within a desired range is not particularly restricted, and conventional means for controlling temperature may be used. Examples of simple and convenient methods include, in the case where molding is conducted by use of the vacuum bag method, a method in which a vacuum bag is immersed in a liquid and a method in which a vacuum bag is pressed against a material for cooling. Of course, a molding machine equipped with a cooling mechanism may be used.

The constitution of a laminated glass includes not only a structure like plastic sheet/interlayer film layer/inorganic glass sheet, but also a structure wherein inorganic glass sheets may be disposed as both outermost layers like inorganic glass sheet/interlayer film layer/plastic sheet/interlayer film layer/inorganic glass sheet. The disposing of inorganic glass sheets as the outermost layers makes a resulting laminated glass excellent in abrasion resistance, scratch resistance, chemical resistance, light resistance and moisture resistance.

When using a structure like plastic sheet/interlayer film layer/inorganic glass sheet, there is no particular limitation regarding which of the plastic sheet and the inorganic glass sheet is located on the indoor side and which one is located on the outdoor side. Any choice is allowed depending on the intended application.

In addition to plastic sheets, interlayer film layers and inorganic glass sheets, one or more additional layers may be provided. Examples of such layer include a primer layer for enhancing the adhesion between an inorganic glass and an interlayer film, a primer layer for enhancing the adhesion between a plastic sheet and an interlayer film, a UV absorbing layer containing a UV absorbing agent, a flame retardant layer for preventing a laminated glass from burning, a decoration layer with various patterns printed, an infrared (heat rays) reflecting layer and a polyester film layer for improving penetration resistance. When such layers are formed, they may be formed at any desired locations by a conventional process, namely, on a plastic sheet, on an interlayer sheet or on an inorganic glass sheet.

As ingredients of a primer layer for enhancing the adhesion between an inorganic glass sheet and an interlayer film, conventionally known ingredients may be appropriately used. In particular, silane coupling agents are suitably used. The silane coupling agent is not particularly restricted. For example, there may be used 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane and vinyltrimetoxysilane. Such silane coupling agents may be used singly or in two or more combinations thereof. Further, they may be used after being diluted with an organic solvent.

Examples of the interlayer film used in the second production process include ethylene-vinyl acetate copolymer resin films, ethylene-acrylate copolymer resin films, and thermoplastic elastomer resin films having properties as thermoplastic elastomer such as polyurethane resin films optionally containing sulfur element.

The average thickness of the interlayer film used in the second production process is preferably 0.1 mm or more but less than 5.0 mm. If the average thickness is less than 0.1 mm and when thermocompression bonding is carried out at a high temperature exceeding 80°C, laminated glass obtained tends to have a large amount of warp and cause large perspective distortion. Further, an embossed pattern on the surface of an interlayer film formed in order to prevent the film from blocking caused by self-sticking of the film will remain due to failure to be smoothened well, resulting in that the transparency of the laminated glass obtained may become poor. If the average thickness of the interlayer is not less than 5.0 mm, the transparency of the laminated glass obtained tends to decrease. More desirable range for the average thickness is 2.0 mm or more but less than 5.0 mm.

The aforementioned ethylene-vinyl acetate copolymer resin film may be either a non-crosslinked type ethylene-vinyl acetate copolymer resin film or a high temperature crosslinked type ethylene-vinyl acetate copolymer resin film. Further, there may be also used modified ethylene-vinyl acetate resin films such as saponified ethylene-vinyl acetate copolymer and hydrolyzed ethylene vinyl acetate.

The ethylene-vinyl acetate copolymer constituting the aforementioned ethylene-vinyl acetate copolymer resin film preferably has a vinyl acetate content of 20 to 40% by weight, as measured in accordance with JIS K6730 "Testing method for ethylene-vinyl acetate resin". If the vinyl acetate content is less than 20% by weight, the interlayer film obtained will be so hard that adhesion to glass or resistance to penetration of a laminated glass tends to become poor. If the vinyl acetate content exceeds 40% by weight, the interlayer film obtained tends to have insufficient breaking strength, and impact resistance of the laminated glass may be insufficient.

The aforementioned ethylene-vinyl acetate copolymer resin film may contain an adhesion regulator unless effects of the present invention are affected. As an adhesion regulator, silane coupling agents are suitably used. The silane coupling agent is not particularly restricted, and includes, for example, 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane, Vinyltrimetoxysilane,
and the like. Such silane coupling agents may be used singly or in two or more combinations thereof.

The addition amount of the silane coupling agent used as the aforementioned adhesion regulator is preferably from 0.01 to 4 parts by weight based on 100 parts by weight of the ethylene-vinyl acetate copolymer resin film. If the amount of the silane coupling agent added is less than 0.01 part by weight, sufficient effect may not be obtained. If the amount of the silane coupling agent added exceeds 4 parts by weight, the strength of the interlayer film obtained tends to become poor.

The aforementioned ethylene-vinyl acetate copolymer resin film may contain a tackifier unless effects of the present invention are affected. Examples of the tackifier which can be advantageously used include, but are not limited to, wood rosin, gum rosin, tall oil rosin, hydrogenated rosin, disproportionated rosin, disproportionated hydrogenated rosin, esterified rosin, metal chlorinated rosin, polymerized rosin, aliphatic petroleum resin, aromatic petroleum resin, alicyclic petroleum resin, copolymerized petroleum resin, hydrogenated petroleum resin, pure monomer petroleum resin, and the like. Such tackifiers may be used singly or in two or more combinations thereof.

The addition amount of the aforementioned tackifier is preferably from 1 to 40 parts by weight based on 100 parts by weight of the ethylene-vinyl acetate copolymer resin film. If the amount of the tackifier to be added is less than 1 part by weight, sufficient effect may not be obtained. If the amount of the tackifier to be added exceeds 40 parts by weight, the transparency of the interlayer film obtained tends to become poor.

The aforementioned ethylene-vinyl acetate copolymer resin film may contain a nucleating agent for the purpose of improving the transparency of the interlayer film. Such a nucleating agent is not particularly restricted, and for example, dibenzylidene sorbitol, dibenzylidene xylitol, dibenzylidene dulcitol, dibenzylidene mannitol and calixarene can be suitably used. Such nucleating agents may be used singly or two or more combinations thereof.

The addition amount of the aforementioned nucleating agent is preferably from 0.01 to 4 parts by weight based on 100 parts by weight of the ethylene-vinyl acetate copolymer resin film. If the amount of the nucleating agent to be added is less than 0.01 part by weight, sufficient effect may not be obtained. If the amount of the nucleating agent to be added exceeds 4 parts by weight, the nucleating agent may form crystals in the resultant interlayer film.

As a method for producing the aforementioned ethylene-vinyl acetate copolymer resin film, conventional known methods may be used. For example, it is possible to form a resin film by compounding predetermined amounts of additives like those mentioned above to an ethylene-vinyl acetate copolymer and kneading the mixture uniformly, followed by the calender roll process, the extrusion sheet casting process, the inflation tube process, or the like.

The ethylene-vinyl acetate copolymer resin film may have polar groups which are introduced on its surface by corona treatment, plasma treatment or the like for the purpose of improving adhesion with inorganic glass sheets.

As the aforementioned ethylene-acrylate copolymer resin film, there maybe employed an ethylene-methyl acrylate copolymer resin film, an ethylene-ethyl acrylate copolymer resin film, ethylene-butyl acrylate copolymer resin film, and the like. Like the aforementioned ethylene-vinyl acetate copolymer resin film, the ethylene-acrylate copolymer resin film may contain a variety of conventional known additives.

The above-mentioned thermoplastic polyurethane resin film which may contain sulfur element may be a thermoplastic polyurethane resin film or a thermoplastic polyurethane resin film containing sulfur element. Examples of the thermoplastic polyurethane resin film containing sulfur element include sulfur-containing polyurethane resin films obtainable by polymerizing polyisocyanate and polythiol or sulfur-containing polyol. Like the aforementioned ethylene-vinyl acetate copolymer resin film, the thermoplastic polyurethane resin film containing sulfur element may contain a variety of conventional known additives.

The aforementioned interlayer films used in the second production process may further contain heat stabilizers, antioxidants, UV absorbers, pigments, dyes, infrared (heat rays) absorbers, moisture resistance improvers, antiblocking agents, flame retardants and antistatic agents unless effects of the present invention are affected.

The inorganic glass sheet used in the second production process is not particularly restricted and may be, for example, float sheet glass, tempered glass, heat-strengthened glass, polished sheet glass, figured sheet glass, meshed sheet glass, wired sheet glass, colored sheet glass, ultraviolet absorbing sheet glass, infrared (heat rays) reflective sheet glass, infrared (heat rays) absorbing sheet glass, etc., which are used for the usual laminated glass. The thickness and shape of the inorganic glass sheet are not particularly restricted and may be chosen depending on its application.

Examples of the plastic sheet used in the second production process include polycarbonate sheet, polymethyl methacrylate sheet, acrylonitrile-styrene copolymer sheet, acrylonitrile-butadiene-styrene copolymer sheet, polyester sheet, fluororesin sheet, polyvinyl chloride sheet, chlorinated polyvinyl chloride sheet, polypropylene sheet, polystyrene sheet, polysulfone sheet, epoxy resin sheet, phenol resin sheet, unsaturated polyester resin sheet, polyimide resin sheet, and the like.

Among the above-mentioned plastic sheets, polycarbonate sheet is suitably used because it is excellent in transparency, impact resistance and combustion resistance.

On the surface of a polycarbonate sheet, a surface protection layer, such as silicone-based hard coat, may be formed for the purpose of improving abrasion resistance, scratch resistance, chemical resistance, light resistance, etc. The thickness and shape of the polycarbonate sheet are not particularly restricted and may be chosen depending on its application.

The aforementioned polycarbonate sheet is hygroscopic and the water adsorbed thereto will form bubbles on heat to affect the transparency or appearance of a laminated glass. It is therefore desirable to remove moisture in a polycarbonate sheet by heating at 80 to 125°C for about 1 to 10 hours before adhering the polycarbonate sheet to an interlayer film.

As the plastic sheet, a polymethyl methacrylate sheet, which has high transparency and is excellent in weatherability and mechanical properties, is preferably used.

On the surface of a polymethyl methacrylate sheet, a surface protection layer may be formed for the purpose of improving abrasion resistance, scratch resistance, chemical resistance, light resistance, etc. The thickness and shape of the polymethyl methacrylate sheet are not particularly restricted and may be chosen depending on its application.

The aforementioned polymethyl methacrylate sheet is hygroscopic and the water adsorbed thereto will form bubbles on heat to affect the transparency or appearance of a laminated glass. It is therefore desirable to remove moisture in a polymethyl methacrylate sheet by heating at 80 to 125°C for about 1 to 10 hours before adhering the polymethyl methacrylate sheet to an interlayer film.

By the second production process explained above, a transparent laminated glass composed partly of plastic sheet can be produced which is less warped and has excellent visibility and satisfactory adhesion. A laminated glass produced by use of the second production process is also one of the present invention.

Next, an invented laminated glass is described in detail which comprises a plastic sheet and an inorganic glass sheet adhered together through an interlayer film interposed therebetween by thermocompression bonding, wherein the interlayer film has an average thickness of more than 2.0 mm but less than 5.0 mm and a temperature at which the thermocompression bonding is carried out is higher than 80°C but lower than 150°C. This laminated glass is hereinafter sometimes referred to as "third laminated glass."

The third laminated glass of the present invention can be produced by laminating a plastic sheet and an inorganic glass sheet through an interlayer film having an average thickness of more than 2.0 mm but less than 5.0 mm and then conducting thermocompression bonding at a temperature of higher than 80°C but lower than 150°C.

The construction of the third laminated glass includes not only a structure like plastic sheet/interlayer film layer/inorganic glass sheet, but also a structure wherein inorganic glass sheets may be disposed as both outermost layers like inorganic glass sheet/interlayer film layer/plastic sheet/interlayer film layer/inorganic glass sheet. The disposing of inorganic glass sheets as the outermost layers makes the obtained laminated glass excellent in abrasion resistance, scratch resistance, chemical resistance, light resistance and moisture resistance.

When using a structure like plastic sheet/interlayer film layer/inorganic glass sheet, there is no particular limitation regarding which of the plastic sheet and the inorganic glass sheet is located on the indoor side and which one is located on the outdoor side. Any choice is allowed depending on its intended application.

In addition to plastic sheets, interlayer film layers and inorganic glass sheets, there may be provided one or more additional layers. Examples of such layer include a primer layer for enhancing the adhesion between an inorganic glass sheet and an interlayer film, a primer layer for enhancing the adhesion between a plastic sheet and an interlayer film, a UV absorbing layer containing a UV absorbing agent, a flame retardant layer for preventing a laminated glass from burning, a decoration layer with various patterns printed, an infrared (heat rays) reflecting layer and a polyester film layer for improving penetration resistance. When such layers are formed, they may be formed at any desired locations by a conventional process, namely, on a plastic sheet, on an interlayer sheet or on an inorganic glass sheet.

As the primer layer ingredient for enhancing the adhesion between an inorganic glass and an interlayer film, conventional known ingredients are appropriately used. In particular, silane coupling agents are suitably used. The silane coupling agent is not particularly restricted and includes, for example, 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane and vinyltrimetoxysilane may be used. Such silane coupling agents may be used singly or in two or more combinations thereof. Further, they may be used after being diluted with an organic solvent.

Examples of the interlayer film used in the third laminated glass include ethylene-vinyl acetate copolymer resin films, ethylene-acrylate copolymer resin films, and thermoplastic elastomer resin films having properties as thermoplastic elastomer such as polyurethane resin films which may contain sulfur element.

The average thickness, as measured using a thickness meter, of the interlayer film used in the third laminated glass is greater than 2.0 mm but smaller than 5.0 mm. If the average thickness is not more than 2.0 mm and when thermocompression bonding is carried out at a high temperature exceeding 80°C, the laminated glass obtained tends to have a large amount of warp, resulting in occasional large perspective distortion. Further, an embossed pattern on the surface of an interlayer film formed in order to prevent the film from blocking caused by self-sticking of the film will remain due to failure to be smoothened well and thus the transparency of the laminated glass obtained may become poor. If the thickness of the interlayer is not less than 5.0 mm, the transparency of the laminated glass obtained tends to decrease.

The aforementioned ethylene-vinyl acetate copolymer resin film may be either a non-crosslinked type ethylene-vinyl acetate copolymer resin film or a high temperature crosslinked type ethylene-vinyl acetate copolymer resin film. Further, modified ethylene-vinyl acetate resin films such as saponified ethylene-vinyl acetate copolymer and hydrolyzed ethylene vinyl acetate may also be used as the ethylene-vinyl acetate copolymer resin film.

The ethylene-vinyl acetate copolymer constituting the aforementioned ethylene-vinyl acetate copolymer resin film preferably has a vinyl acetate content of 20 to 40% by weight, as measured in accordance with JIS K6730 "Testing method for ethylene-vinyl acetate resin". If the vinyl acetate content is less than 20% by weight, the interlayer film obtained will be so hard that adhesion to glass or resistance to penetration of the laminated glass tends to become poor. If the vinyl acetate content exceeds 40% by weight, the interlayer film obtained tends to have insufficient breaking strength and impact resistance of the laminated glass may be insufficient.

The aforementioned ethylene-vinyl acetate copolymer resin film may contain an adhesion regulator unless effects of the present invention are affected. As the adhesion regulator, silane coupling agents are suitably used. The silane coupling agent is not particularly restricted, and for example, 3-(2-aminoethyl)-3-aminopropylmethyldimethoxysilane, 3-glycidoxypropyltrimetoxysilane, 2-(3,4-epoxycyclohexyl)ethyltrimethoxysilane, 3-methacryloxypropyltrimethoxysilane, 3-mercaptopropyltrimethoxysilane and vinyltrimetoxysilane may be used. Such silane coupling agents may be used singly or in two or more combinations thereof.

The addition amount of the silane coupling agent used as the aforementioned adhesion regulator is preferably from 0.01 to 4 parts by weight based on 100 parts by weight of the ethylene-vinyl acetate copolymer resin film. If the amount of the silane coupling agent to be added is less than 0.01 part by weight, sufficient effect may not be obtained. If the amount of the silane coupling agent to be added exceeds 4 parts by weight, the strength of the interlayer film obtained tends to become poor.

The aforementioned ethylene-vinyl acetate copolymer resin film may contain a tackifier unless effects of the present invention are affected. Examples of the tackifier which can be suitably used include, but are not limited to, wood rosin, gumrosin,talloilrosin,hydrogenatedrosin,disproportionated rosin, disproportionated hydrogenated rosin, esterified rosin, metal chlorinated rosin, polymerized rosin, aliphatic petroleum resin, aromatic petroleum resin, alicyclic petroleum resin, copolymerized petroleum resin, hydrogenated petroleum resin and pure monomer petroleum resin. Such tackifiers may be used singly or in two or more combinations thereof.

The addition amount of the aforementioned tackifier is preferably from 1 to 40 parts by weight based on 100 parts by weight of the ethylene-vinyl acetate copolymer resin film. If the amount of the tackifier added is less than 1 part by weight, sufficient effect may not be obtained. If the amount of the tackifier to be added exceeds 40 parts by weight, the transparency of the interlayer film obtained tends to become poor.

The aforementioned ethylene-vinyl acetate copolymer resin film may contain a nucleating agent for the purpose of improving the transparency of the interlayer film. Such nucleating agent is not particularly restricted, and for example, dibenzyliene sorbitol, dibenzylidene xylitol, dibenzylidene dulcitol, dibenzylidene mannitol and calixarene can be suitably used. Such nucleating agents may be used singly or two or more combinations thereof.

The addition amount of the aforementioned nucleating agent is preferably from 0.01 to 4 parts by weight based on 100 parts by weight of the ethylene-vinyl acetate copolymer resin film. If the amount of the nucleating agent to be added is less than 0.01 part by weight, sufficient effect may not be obtained. If the amount of the nucleating agent to be added exceeds 4 parts by weight, the nucleating agent may form crystals in the interlayer film obtained.

In the aforementioned ethylene-vinyl acetate copolymer resin film may further contain heat stabilizers, antioxidants, UV absorbers, pigments, dyes, infrared (heat rays) absorbers, moisture resistance improvers, antiblocking agents, flame retardants and antistatic agents, etc. unless effects of the present invention are affected.

As a method for producing the aforementioned ethylene-vinyl acetate copolymer resin film, conventional known methods may be used. For example, it is possible to form a resin film by compounding predetermined amounts of additives like those mentioned above to an ethylene-vinyl acetate copolymer and kneading the mixture uniformly, followed by the calender roll process, the extrusion sheet casting process, the inflation tube process, or the like.

The ethylene-vinyl acetate copolymer resin film may have polar groups which are introduced on its surface by corona treatment, plasma treatment or the like for the purpose of improving adhesion with inorganic glass sheets.

As the aforementioned ethylene-acrylate copolymer resin film, an ethylene-methyl acrylate copolymer resin film, an ethylene-ethyl acrylate copolymer resin film, an ethylene-butyl acrylate copolymer resin film, and the like may be used. Like the aforementioned ethylene-vinyl acetate copolymer resin, the ethylene-acrylate copolymer resin film may contain a variety of conventional known additives.

Examples of the polyurethane resin film which may contain sulfur element include polyurethane resin films and polyurethane resin films containing sulfur element. Such polyurethane resin film containing sulfur element may be conventionally known one, including, for example, sulfur-containing polyurethane resin films obtainable by polymerizing polyisocyanate and polythiol and/or sulfur-containing polyol. Like the aforementioned ethylene-vinyl acetate copolymer resin film, the polyurethane resin film which may contain sulfur element may contain a variety of conventional known additives.

The inorganic glass sheet in the third laminated glass is not particularly restricted and may be, for example, float sheet glass, tempered glass, heat-strengthened glass, polished sheet glass, figured sheet glass, meshed sheet glass, wired sheet glass, colored sheet glass, ultraviolet absorbing sheet glass, infrared (heat rays) reflective sheet glass, infrared (heat rays) absorbing sheet glass, etc., which are used for the usual laminated glass. The thickness and shape of the inorganic glass sheet are not particularly restricted and may be appropriately chosen depending on its application.

Examples of the plastic sheet in the third laminated glass include polycarbonate sheet, polymethyl methacrylate sheet, acrylonitrile-styrene copolymer sheet, acrylonitrile-butadiene-styrene copolymer sheet, polyester sheet,fluororesinsheet,polyvinyl chloridesheet,chlorinated polyvinyl-chloride sheet, polypropylene sheet, polystyrene sheet, polysulfone sheet, epoxy resin sheet, phenol resin sheet, unsaturated polyester resin sheet, polyimide resin sheet, and the like.

Among the above-mentioned plastic sheets, polycarbonate sheet is suitably used because it is excellent in transparency, impact resistance and combustion resistance.

On the surface of a polycarbonate sheet, a surface protection layer, such as silicone-based hard coat, may be formed for the purpose of improving abrasion resistance, scratch resistance, chemical resistance, light resistance, etc. The thickness and shape of the polycarbonate sheet are not particularly restricted and may be appropriately chosen depending on its application.

Since the aforementioned polycarbonate sheet is hygroscopic, the water adsorbed thereto will form bubbles on heat to affect the transparency or appearance of the laminated glass. It is therefore desirable to remove moisture by heating at 80 to 125°C for about 1 to 10 hours before using the polycarbonate sheet.

As the plastic sheet, a polymethyl methacrylate sheet, which has high transparency and is excellent in weatherability and mechanical properties, is suitably used.

On the surface of the polymethyl methacrylate sheet, a surface protection layer may be formed for the purpose of improving abrasion resistance, scratch resistance, chemical resistance, light resistance, etc. The thickness and shape of the polymethyl methacrylate sheet are not particularly restricted and may be appropriately chosen depending on its application.

Since the aforementioned polymethyl methacrylate sheet is hygroscopic, the water adsorbed thereto will form bubbles on heat to affect the transparency or appearance of the laminated glass. It is therefore desirable to remove the moisture by heating at 80 to 125°C for about 1 to 10 hours before using the polymethyl methacrylate sheet.

In the production of the third laminated glass, the method of stacking a plastic sheet and an inorganic glass sheet through an interlayer film interposed therebetween by thermocompression bonding is not particularly restricted. Conventionally known methods used in the production of laminated glass, such as the vacuum bag method, the hot-pressing method, the press-rolling method and the autoclave method, may be used.

The thermocompression bonding temperature used in the thermocompression bonding of a plastic sheet and an inorganic glass sheet through an interlayer film interposed therebetween for obtaining the third laminated glass is higher than 80°C but lower than 150°C. When the thermocompression bonding temperature is 80°C or lower, the interface adhesion between the interlayer film and the plastic sheet or the interface adhesion between the interlayer film and the inorganic glass sheet will be insufficient, and delamination will occur in the resulting laminated glass. When the surface of the interlayer film is provided with an embossed pattern, embossed marks may remain. When the thermocompression bonding temperature is 150°C or higher, a large amount of warp will occur in the resulting laminated glass, leading to a large transmission distortion. A more desirable range is from 90°C to 140°C, and a particularly desirable range is from 100°C to 120°C.

The third laminated glass described above is a transparent laminated glass composed partly of plastic sheet which is less warped and which has excellent visibility and satisfactory adhesion.

Examples

The present invention will be described below in more detail with reference to Examples.

First, Examples 1 to 16 are shown as examples of the first production method and laminated glass produced by the method and Comparative Examples 1 to 34 are shown as comparative examples corresponding to the Examples. In these Examples, the first interlayer film was adhered onto one side of a plastic sheet by any one of the following methods, and the second interlayer film was adhered onto one side of an inorganic glass sheet by any one of the following methods. However, only in Examples 11 and 12, partly different processes were used.

(Method 1 of adhering the first interlayer film onto one side of a plastic sheet)

A polycarbonate sheet (300 mm × 300 mm × 2 mm, manufactured by Nippon Testpanel Co., Ltd.), an ethylene-vinyl acetate copolymer resin film (300 mm × 300 mm, average thickness 0.37 mm, manufactured by Sekisui Chemical Co., Ltd.) and a release PET film (30mm × 30 mm × 0.02 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bagwas heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and the laminated product formed was taken out. Removal of the release PET film from the resulting laminated product yielded a polycarbonate sheet with an ethylene-vinyl acetate copolymer resin film adhered on its one side. The resulting polycarbonate sheet with an ethylene-vinyl acetate copolymer resin film adhered on its one side was named "Component PC-EVA."

(Method 2 of adhering the first interlayer film onto one side of a plastic sheet)

A polymethyl methacrylate sheet (300 mm × 300 mm × 2 mm, manufactured by Nippon Testpanel Co., Ltd.), an ethylene-vinyl acetate copolymer resin film, and a release PET film (30 mm × 30 mm × 0.02 mm) were laminated in this order, and they were fastened with a heat-resistant tape so as not to slide. The ethylene-vinyl acetate copolymer resin film is the same as that used in the preparation of Component PC-EVA.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded a polymethyl methacrylate sheet with an ethylene-vinyl acetate copolymer resin film adhered on its one side. The resulting polycarbonate sheet with an ethylene-vinyl acetate copolymer resin film adhered on its one side was named "Component PMMA-EVA."

(Method 3 of adhering the first interlayer film onto one side of a plastic sheet)

A polycarbonate sheet (300 mm × 300 mm × 2 mm, manufactured by Nippon Testpanel Co., Ltd.), a polyurethane resin film (300 mm × 300 mm, average thickness of 0.61 mm, manufactured by Morton Co., Ltd.) and a release PET film (30mm × 30 mm × 0.02 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded a polycarbonate sheet with a polyurethane resin film adhered on its one side. The resulting polycarbonate sheet with a polyurethane resin film adhered on its one side was named "Component PC-PU."

(Method 4 of adhering the first interlayer film onto one side of a plastic sheet)

A polycarbonate sheet (300 mm × 300 mm × 2 mm, manufactured by Nippon Testpanel Co., Ltd.), a polyvinyl butyral resin film (300 mm × 300 mm, average thickness 0.76 mm, manufactured by Sekisui Chemical Co., Ltd.) and a release PET film (300 mm × 300 mm × 0.02 mm) were piled up in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded a polycarbonate sheet with a polyvinyl butyral resin film adhered on its one side. The resulting polycarbonate sheet with a polyvinyl butyral resin film adhered on its one side was named "Component PC-PVB."

(Method 5 of adhering the first interlayer film onto one side of a plastic sheet)

A polymethyl methacrylate sheet (300 mm × 300 mm × 2 mm, manufactured by Nippon Testpanel Co., Ltd.), a polyvinyl butyral resin film, and a release PET film (300 mm × 300 mm × 0.02 mm) were laminated in this order, and they were fastened with a heat-resistant tape so as not to slide. The polyvinyl butyral resin film is the same as that used in the preparation of Component PC-PVB.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded a polymethyl methacrylate sheet with a polyvinyl butyral resin film adhered on its one side. The resulting polymethyl methacrylate sheet with a polyvinyl butyral resin film adhered on its one side was named "Component PMMA-PVB."

(Method 1 of adhering the second interlayer film onto one side of an inorganic glass sheet)

An inorganic glass sheet (300mmx 300mm×2.5mm, manufactured by Nippon Testpanel Co., Ltd.), an ethylene-vinyl acetate copolymer resin film and a release PET film (300 mm × 300 mm × 0.02 mm) were laminated in this order, and they were fastened with aheat-resistant tape so as not to slide. The ethylene-vinyl acetate copolymer resin film is the same as that used in the preparation of Component PC-EVA.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded an inorganic glass sheet with an ethylene-vinyl acetate copolymer resin film adhered on its one side. The resulting inorganic glass sheet with an ethylene-vinyl acetate copolymer resin film adhered on its one side was named "Component G-EVA. "

(Method 2 of adhering the second interlayer film onto one side of an inorganic glass sheet)

An inorganic glass sheet (300 mm × 300 mm × 2.5 mm, manufactured by Nippon Testpanel Co., Ltd.), a polyurethane resin film and a release PET film (300 mm × 300 mm × 0.02 mm) were laminated in this order, and they were fastened with a heat-resistant tape so as not to slide. The polyurethane resin film is the same as that used in the preparation of Component PC-PU.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°Cwhile keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded an inorganic glass sheet with a polyurethane resin film adhered on its one side. The resulting inorganic glass sheet with a polyurethane resin film adhered on its one side was named "Component G-PU."

(Method 3 of adhering the second interlayer film onto one side of an inorganic glass sheet)

An inorganic glass sheet (300 mm × 300 mm × 2.5 mm, manufactured by Nippon Testpanel Co., Ltd.), a polyvinyl butyral resin film and a release PET film (300 mm × 300 mm × 0.02 mm) were laminated in this order, and they were fastened with a heat-resistant tape so as not to slide. The polyvinyl butyral resin film is the same as that used in the preparation of Component PC-PVB.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release PET film from the resulting laminated product yielded an inorganic glass sheet with a polyvinyl butyral resin film adhered on its one side. The resulting inorganic glass sheet with a polyvinyl butyral resin film adhered on its one side was named "Component G-PVB."

(Example 1)

Component PC-EVA and Component G-EVA were laminated together so that the ethylene-vinyl acetate copolymer resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 30°C while keeping the degassed condition. After the temperature reached 30°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed ethylene-vinyl acetate copolymer resin film.

The ten-point average surface roughness of the first interlayer film and the second interlayer film are shown in Table 1.

(Example 2)

Component PC-EVA and Component G-EVA were laminated together so that the ethylene-vinyl acetate copolymer resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 40°C while keeping the degassed condition. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed ethylene-vinyl acetate copolymer resin film.

(Example 3)

Component PC-EVA and Component G-EVA were laminated together so that the ethylene-vinyl acetate copolymer resin films of both components were adhered together and they were fastened with a heat-resistant tape.

Then, the resultant laminated product was held at the top and bottom between plate-like weights (330 mm × 330 mm × 2.5 mm, 2 kg) and was applied with a pressure of 15 kgf/cm$^2$ at a temperature of 30°C for 5 minutes, using a hydraulic press machine. There was thereby obtained a laminated glass comprising a polycarbonate sheet and an inorganic glass sheet adhered through the interposed ethylene-vinyl acetate copolymer resin film.

(Example 4)

Component PC-EVA and Component G-EVAwere laminated together so that the ethylene-vinyl acetate copolymer resin films of both components were adhered together and they were fastened with a heat-resistant tape.

Then, the resultant laminated product was held at the top and bottom between plate-like weights (330 mm × 330 mm × 2.5 mm, 2 kg) and was applied with a pressure of 15 kgf/cm$^2$ at a temperature of 40°C for 5 minutes, using a hydraulic press machine. There was thereby obtained a laminated glass comprising a polycarbonate sheet and an inorganic glass sheet adhered through the interposed ethylene-vinyl acetate copolymer resin film.

(Comparative Example 1)

A polycarbonate sheet, continuous two ethylene-vinyl acetate copolymer resin films and an inorganic glass sheet were laminated in this order, and they were fastened with a heat-resistant tape so as not to slide. Thepolycarbonatesheet, the ethylene-vinyl acetate copolymer resin film and the inorganic glass sheet are the same as those used in Example 1.

Subsequently, the resultant laminated product was placed in a rubber bag of a vacuum laminator (manufactured by Hi-Tech Engineering Co., Ltd.) so that the polycarbonate sheet was located below the inorganic glass sheet, and the rubber bag was degassed for 10 minutes at normal temperature under a vacuum pressure of 70 cmHg. Then, the vacuum bag was heated to 30°C while keeping the degassed condition. After the temperature reached 30°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed ethylene-vinyl acetate copolymer resin film.

(Comparative Example 2)

A laminated glass was produced in the same manner as Comparative Example 1 except that the vacuum bag was heated to 40°C and was held for 10 minutes after the temperature reached 40°C.

(Comparative Example 3)

A laminated glass was produced in the same manner as Comparative Example 1 except that the vacuum bag was heated to 100°C and was held for 10 minutes after the temperature reached 100°C.

(Comparative Example 4)

A laminated glass was produced in the same manner as Comparative Example 1 except that one ethylene-vinyl acetate copolymer resin film (300 mm × 300 mm, average thickness of 0.77 mm, manufactured by Sekisui Chemical Co., Ltd.) was used instead of continuous two layers of ethylene-vinyl acetate copolymer resin film with an average thickness of 0.37 mm.

(Comparative Example 5)

A laminated glass was produced in the same manner as Comparative Example 4 except that the vacuum bag was heated to 40°C and was held for 10 minutes after the temperature reached 40°C.

(Comparative Example 6)

A laminated glass was produced in the same manner as Comparative Example 4 except that the vacuum bag was heated to 100°C and was held for 10 minutes after the temperature reached 100°C.

(Comparative Example 7)

A polycarbonate sheet, continuous two ethylene-vinyl acetate copolymer resin films and an inorganic glass sheet were laminated in this order, and they were fastened with a heat-resistant tape so as not to slide. The polycarbonate sheet, the ethylene-vinyl acetate copolymer resin film and the inorganic glass sheet are the same as those used in Comparative Example 1.

Then, the laminated product was held at the top and bottom between plate-like weights (330 mm × 330 mm × 2.5 mm, 2 kg) and was applied with a pressure of 15 kgf/cm$^2$ at a temperature of 30°C for 5 minutes, using a hydraulic press machine. There was thereby obtained a laminated glass comprising a polycarbonate sheet and an inorganic glass sheet adhered through the interposed ethylene-vinyl acetate copolymer resin film.

(Comparative Example 8)

A laminated glass was produced in the same manner as Comparative Example 7 except that the heating temperature by a hydraulic press machine was changed to 40°C.

(Comparative Example 9)

A laminated glass was produced in the same manner as Comparative Example 7 except that the heating temperature by a hydraulic press machine was changed to 100°C.

(Comparative Example 10)

A laminated glass was produced in the same manner as Comparative Example 7 except that one ethylene-vinyl acetate copolymer resin film (300 mm × 300 mm, average thickness 0.77 mm, manufactured by Sekisui Chemical Co., Ltd.) was used instead of continuous two layers of ethylene-vinyl acetate copolymer resin film with an average thickness of 0.37 mm.

(Comparative Example 11)

A laminated glass was produced in the same manner as Comparative Example 8 except that one ethylene-vinyl acetate copolymer resin film (300 mm × 300 mm, average thickness of 0.77 mm, manufactured by Sekisui Chemical Co., Ltd.) was used instead of two ethylene-vinyl acetate copolymer resin films with an average thickness of 0.37 mm.

(Comparative Example 12)

A laminated glass was produced in the same manner as Comparative Example 9 except that one ethylene-vinyl acetate copolymer resin film (300 mm × 300 mm, average thickness of 0.77 mm, manufactured by Sekisui Chemical Co., Ltd.) was used instead of two ethylene-vinyl acetate copolymer resin films with an average thickness of 0.37 mm.

(Example 5)

Component PMMA-EVA and Component G-EVA were laminated together so that the ethylene-vinyl acetate copolymer resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 30°C while keeping the degassed condition. After the temperature reached 30°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethyl methacrylate sheet and an inorganic glass sheet adhered through the interposed ethylene-vinyl acetate copolymer resin film.

(Example 6)

Component PMMA-EVA and Component G-EVA were laminated together so that the ethylene-vinyl acetate copolymer resin films of both components were adhered together and they were fastened with a heat-resistant tape.

Then, the laminated product was held at the top and bottom between plate-like weights (330 mm × 330 mm × 2. 5 mm, 2 Kg) and was applied with a pressure of 15 kgf/cm$^2$ at a temperature of 30°C for 1 minute, using a hydraulic press machine. There was thereby obtained a laminated glass comprising a polymethyl methacrylate sheet and an inorganic glass sheet adhered through the interposed ethylene-vinyl acetate copolymer resin film.

(Example 7)

Component PMMA-EVA and Component G-EVA were laminated together so that the ethylene-vinyl acetate copolymer resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 40°C while keeping the degassed condition. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethyl methacrylate sheet and an inorganic glass sheet adhered through the interposed ethylene-vinyl acetate copolymer resin film.

(Example 8)

Component PMMA-EVA and Component G-EVA were laminated together so that the ethylene-vinyl acetate copolymer resinfilms of both components were adhered together and they were fastened with a heat-resistant tape.

Then, the resultant laminated product was held at the top and bottom between plate-like weights (330 mm × 330 mm × 2.5 mm, 2 kg) and was applied with a pressure of 15 kgf/cm$^2$ at a temperature of 40°C for 1 minute, using a hydraulic press machine. There was thereby obtained a laminated glass comprising a polymethyl methacrylate sheet and an inorganic glass sheet adhered through the interposed ethylene-vinyl acetate copolymer resin film.

(Comparative Example 13)

A polymethyl methacrylate sheet, continuous two ethylene-vinyl acetate copolymer resin films and an inorganic glass sheet were laminated in this order, and they were fastened with a heat-resistant tape so as not to slide. The polymethyl methacrylate sheet, the ethylene-vinyl acetate copolymer resin film and the inorganic glass sheet are the same as those used in Example 5.

Subsequently, the resultant laminated product was placed in a rubber bag of a vacuum laminator (manufactured by Hi-Tech Engineering Co., Ltd.) so that the polycarbonate sheet was located below the inorganic glass sheet, and the rubber bag was degassed for 10 minutes at normal temperature under a vacuum pressure of 70 cmHg. Then, the vacuum bag was heated to 30°C while keeping the degassed condition. After the temperature reached 30°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethylmethacrylate sheet and an inorganic glass sheet adhered through the interposed ethylene-vinyl acetate copolymer.

(Comparative Example 14)

A laminated glass was produced in the same manner as Comparative Example 13 except that the vacuum bag was heated to 40°C and was held for 10 minutes after the temperature reached 40°C.

(Comparative Example 15)

A laminated glass was produced in the same manner as Comparative Example 13 except that a vacuum bag was heated to 100°C and was held for 10 minutes after the temperature reached 100°C.

(Comparative Example 16)

A laminated glass was produced in the same manner as Comparative Example 13 except that one ethylene-vinyl acetate copolymer resin film (300 mm × 300 mm, average thickness of 0.77 mm, manufactured by Sekisui Chemical Co., Ltd.) was used instead of two ethylene-vinyl acetate copolymer resin films with an average thickness of 0.37 mm.

(Comparative Example 17)

A laminated glass was produced in the same manner as Comparative Example 14 except that one ethylene-vinyl acetate copolymer resin film (300 mm × 300 mm, average thickness of 0.77 mm, manufactured by Sekisui Chemical Co., Ltd.) was used instead of two ethylene-vinyl acetate copolymer resin films with an average thickness of 0.37 mm.

(Comparative Example 18)

A laminated glass was produced in the same manner as Comparative Example 15 except that one ethylene-vinyl acetate copolymer resin film (300 mm × 300 mm, average thickness of 0.77 mm, manufactured by Sekisui Chemical Co., Ltd.) was used instead of two ethylene-vinyl acetate copolymer resin films with an average thickness of 0.37 mm.

(Example 9)

Component PC-PU and Component G-PU were laminated together so that the polyurethane resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 60°C while keeping the degassed condition. After the temperature reached 60°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed polyurethane resin film.

(Example 10)

Component PC-PU and Component G-PU were laminated together so that the polyurethane resin films of both components were adhered together and they were fastened with a heat-resistant tape.

Then, the laminated product was held at the top and bottom between plate-like weights (330 mm × 330 mm × 2.5 mm, 2 kg) and was applied with a pressure of 15 kgf/cm$^2$ at a temperature of 60°C for 1 minute, using a hydraulic press machine. There was thereby obtained a laminated glass comprising a polycarbonated sheet and an inorganic glass sheet adhered through the interposed polyurethane resin film.

(Comparative Example 19)

A polycarbonate sheet, continuous two polyurethane resin films and an inorganic glass sheet were laminated in this order, and they were fastened with a heat-resistant tape so as not to slide. The polycarbonate sheet, the polyurethane resin film and the inorganic glass sheet are the same as those used in Example 9.

Subsequently, the resultant laminated product was placed in a rubber bag of a vacuum laminator (manufactured by Hi-Tech Engineering Co., Ltd.) so that the polycarbonate sheet was located below the inorganic glass sheet, and the rubber bag was degassed for 10 minutes at normal temperature under a vacuum pressure of 70 cmHg. Then, the vacuum bag was heated to 60°C while keeping the degassed condition. After the temperature reached 60°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed polyurethane resin film.

(Comparative Example 20)

A laminated glass was produced in the same manner as Comparative Example 19 except that the vacuum bag was heated to 100°C and was held for 10 minutes after the temperature reached 100°C.

(Comparative Example 21)

A polycarbonate sheet, continuous two polyurethane resin films and an inorganic glass sheet were laminated in this order, and they were fastened with a heat-resistant tape so as not to slide. The polycarbonate sheet, the polyurethane resin film and the inorganic glass sheet are the same as those used in Example 9.

Then, the laminated product was held at the top and bottom between plate-like weights (330 mm × 330 mm × 2.5 mm, 2 kg) and was applied with a pressure of 15 kgf/cm$^2$ at a temperature of 60°C for 1 minute, using a hydraulic press machine. There was thereby obtained a laminated glass comprising a polycarbonated sheet and an inorganic glass sheet adhered through the interposed polyurethane resin film.

(Comparative Example 22)

A laminated glass was produced in the same manner as Comparative Example 21 except that the temperature of a hydraulic press machine was changed to 100°C.

(Example 11)

A polycarbonate sheet (300 mm × 300 mm × 2 mm, manufactured by Nippon Testpanel Co., Ltd.), an ethylene-vinyl acetate copolymer resin film (300 mm × 300 mm, average thickness of 0.37 mm, manufactured by Sekisui Chemical Co., Ltd.) and a release film (30 mm × 30 mm × 0.02 mm) having a surface rougher than that of the release PET used in "Method 1 of adhering the first interlayer film onto one side of a plastic sheet" were laminated in this order, and they were fastened with a heat-resistant tape so as not to slide. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was removed. Removal of the release film from the resultant laminated product yielded a polycarbonate sheet with an ethylene-vinyl acetate copolymer resin film adhered on its one side.

An inorganic glass sheet (300mm×300mm×2.5mm, manufactured by Nippon Testpanel Co., Ltd.), an ethylene-vinyl acetate copolymer resin film and a release film (300 mm × 300 mm × 0.02 mm) having a surface rougher than that of the release PET used in "Method 1 of adhering a second interlayer film onto one side of an inorganic glass sheet" were laminated in this order, and they were fastened with a heat-resistant tape so as not to slide. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bagwas heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release film from the resultant laminated product yielded an inorganic glass sheet with an ethylene-vinyl acetate copolymer resin film adhered on its one side.

The ethylene-vinyl acetate copolymer resin film adhered on its one side and the inorganic glass sheet with an ethylene-vinyl acetate copolymer resin film adhered on its one side were laminated together so that the ethylene-vinyl acetate copolymer resin films were adhered together and they were fastened with a heat-resistant tape. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 30°C while keeping the degassed condition. After the temperature reached 30°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed ethylene-vinyl acetate copolymer resin film.

(Example 12)

A polycarbonate sheet (300 mm × 300 mm × 2 mm, manufactured by Nippon Testpanel Co., Ltd.), an ethylene-vinyl acetate copolymer resin film (300 mm × 300 mm, average thickness of 0.37 mm, manufactured by Sekisui Chemical Co., Ltd.) and a release film (30 mm × 30 mm × 0.02 mm) having a surface rougher than that of the release PET used in "Method 1 of adhering the first interlayer film onto one side of a plastic sheet" were laminated in this order, and they were fastened with a heat-resistant tape so as not to slide. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release film from the resultant laminated product yielded a polycarbonate sheet with an ethylene-vinyl acetate copolymer resin film adhered on its one side.

An inorganic glass sheet (300 mm × 300 mm × 2. 5 mm, manufactured by Nippon Testpanel Co., Ltd.), an ethylene-vinyl acetate copolymer resin film and a release film (300 mm × 300 mm × 0.02 mm) having a surface rougher than that of the release PET used in "Method 1 of adhering the second interlayer film onto one side of an inorganic glass sheet" were laminated in this order, and they were fastened with a heat-resistant tape so as not to slide. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while the degassed condition was held. After the temperature reached 100°C, the vacuum bag was held for 10 minutes. Then, the vacuum bag was cooled spontaneously. After making sure that the temperature of the rubber bag had fallen to 25°C, the pressure was released to normal pressure and a laminated product formed was taken out. Removal of the release film from the resultant laminated product yielded an inorganic glass sheet with an ethylene-vinyl acetate copolymer resin film adhered on its one side.

The polycarbonate sheet with an ethylene-vinyl acetate copolymer resin film adhered on its one side and the inorganic glass sheet with an ethylene-vinyl acetate copolymer resin film adhered on its one side were laminated together so that the ethylene-vinyl acetate copolymer resin films were adhered together and they were fastened with a heat-resistant tape. Then, the laminated product was held at the top and bottom between plate-like weights (330 mm × 330 mm × 2.5 mm, 2 kg) and was applied with a pressure of 15 kgf/cm$^2$ at a temperature of 30°C for 5 minutes, using a hydraulic press machine. There was thereby obtained a laminated glass comprising a polycarbonated sheet and an inorganic glass sheet adhered through the interposed ethylene-vinyl acetate copolymer resin film.

(Example 13)

Component PC-PVB and Component G-PVB were laminated together so that the polyvinyl butyral resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 40°C while keeping the degassed condition. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed polyvinyl butyral resin film.

(Example 14)

Component PC-PVB and Component G-PVB were laminated together so that the polyvinyl butyral resin films of both components were adhered together and they were fastened with a heat-resistant tape.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 50°C while keeping the degassed condition. After the temperature reached 50°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed polyvinyl butyral resin film.

(Comparative Example 23)

A polycarbonate sheet, continuous two polyvinyl butyral resin films and an inorganic glass sheet were laminated in this order, and they were fastened with a heat-resistant tape so as not to slide. The polycarbonate sheet, the polyvinyl butyral resin film and the inorganic glass sheet are the same as those used in Example 13.

Subsequently, the resultant laminated product was placed in a rubber bag of a vacuum laminator (manufactured by Hi-Tech Engineering Co., Ltd.) so that the polycarbonate sheet was located below the inorganic glass sheet, and the rubber bag was degassed for 10 minutes at normal temperature under a vacuum pressure of 70 cmHg. Then, the vacuum bag was heated to 40°C while the degassed condition was held. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polycarbonate sheet and an inorganic glass sheet adhered through the interposed polyvinyl butyral resin film.

(Comparative Example 24)

A laminated glass was produced in the same manner as Comparative Example 23 except that the vacuum bag was heated to 50°C and was held for 10 minutes after the temperature reached 50°C.

(Comparative Example 25)

A laminated glass was produced in the same manner as Comparative Example 23 except that the vacuum bag was heated to 100°C and was held for 10 minutes after the temperature reached 100°C.

(Comparative Example 26)

The procedures are the same as those of Comparative Example 23 except that one polyvinyl butyral resin film (300 mm × 300 mm, average thickness of 1. 5 mm, manufactured by Sekisui Chemical Co., Ltd.) was used instead of continuous two layers of polyvinyl butyral resin film having an average thickness of 0.76 mm.

(Comparative Example 27)

A laminated glass was produced in the same manner as Comparative Example 26 except that the vacuum bag was heated to 50°C and was held for 10 minutes after the temperature reached 50°C.

(Comparative Example 28)

A laminated glass was produced in the same manner as Comparative Example 26 except that the vacuum bag was heated to 100°C and was held for 10 minutes after the temperature reached 100°C.

(Example 15)

Component PMMA-PVB and Component G-PVB were laminated together so that the polyvinyl butyral resin films of both components were adhered together and they were fastened with a heat-resistant tape.
Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 40°C while keeping the degassed condition. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethyl methacrylate sheet and an inorganic glass sheet adhered through the interposed polyvinyl butyral resin film.

(Example 16)

Component PMMA-PVB and Component G-PVB were laminated together so that the polyvinyl butyral resin films of both components were adhered together and they were fastened with a heat-resistant tape.
Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 50°C while keeping the degassed condition. After the temperature reached 50°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethyl methacrylate sheet and an inorganic glass sheet adhered through the interposed polyvinyl butyral resin film.

(Comparative Example 29)

A polymethyl methacrylate sheet, continuous two polyvinyl butyral resin films and an inorganic glass sheet were laminated in this order, and they were fastened with a heat-resistant tape so as not to slide. The polymethyl methacrylate sheet, the polyvinyl butyral resin film and the inorganic glass sheet are the same as those used in Example 15.
Subsequently, the resultant laminated product was placed in a rubber bag of a vacuum laminator (manufactured by Hi-Tech Engineering Co., Ltd.) so that the polymethyl methacrylate sheet was located below the inorganic glass sheet, and the rubber bag was degassed for 10 minutes at normal temperature under a vacuum pressure of 70 cmHg. Then, the vacuum bag was heated to 40°C while keeping the degassed condition was held. After the temperature reached 40°C, the vacuum bag was held for 10 minutes. Then, the vacuum bag was cooled spontaneously. After making sure that the temperature of the rubber bag had fallen to 25°C, the pressure was released to normal pressure to yield a laminated glass comprising a polymethylmethacrylate sheet and an inorganic glass sheet adhered through the interposed polyvinyl butyral resin.

(Comparative Example 30)

A laminated glass was produced in the same manner as Comparative Example 29 except that the vacuum bag was heated to 50°C and was held for 10 minutes after the temperature reached 50°C.

(Comparative Example 31)

A laminated glass was produced in the same manner as Comparative Example 29 except that the vacuum bag was heated to 100°C and was held for 10 minutes after the temperature reached 100°C.

(Comparative Example 32)

A laminated glass was produced in the same manner as Comparative Example 29 except that one polyvinyl butyral resin film (300 mm × 300 mm, average thickness of 1.5 mm, manufactured by Sekisui Chemical Co., Ltd.) was used instead of continuous two layers of polyvinyl butyral resin film having an average thickness of 0.76 mm.

(Comparative Example 33)

A laminated glass was produced in the same manner as Comparative Example 30 except that one polyvinyl butyral resin film (300 mm × 300 mm, average thickness of 1. 5 mm, manufactured by Sekisui Chemical Co., Ltd.) was used instead of continuous two layers of polyvinyl butyral resin film having an average thickness of 0.76 mm.

(Comparative Example 34)

A laminated glass was produced in the same manner as Comparative Example 31 except that one polyvinyl butyral resin film (300 mm × 300 mm, average thickness of 1.5 mm, manufactured by Sekisui Chemical Co., Ltd.) was used instead of two polyvinyl butyral resin films having an average thickness of 0.76 mm.

(Test Example 1)

For the laminated glass produced in Examples 1 to 16 and Comparative Examples 1 to 34, (1) the amount of warp of a laminated glass, (2) the presence of delamination at the interface between an interlayer film and a plastic sheet and (3) the presence of delamination at the interface between an interlayer film and an inorganic glass sheet were evaluated in accordance with evaluation methods shown below. Moreover, for the laminated glass of Examples 1 to 16, (4) the surface roughness (ten-point height of roughness) of the first interlayer film and the second interlayer film and (5) the presence of delamination at the interface between the first interlayer film and the second interlayer film were evaluated in accordance with evaluation methods shown below.

(Evaluation method)

(Method for evaluating the amount of warp of laminated glass)

A laminated glass was stored in a constant temperature/humidity chamber at 20°C, 50%RH for 24 hours. Subsequently, according to JIS R3202, a laminated glass warping like an arch was stood perpendicularly on a smooth steel plate. A ruler was put on the laminated glass horizontally and the amount of warp was measured with a clearance gauge.

(Evaluation of Adhesion)

The existence of delamination at the interface was visually observed.

(Measurement of Surface Roughness)

A laminated product was stored in a constant temperature/humidity chamber at 20°C, 50%RH for 24 hours and then the ten-point height of roughness of the first interlayer film and the second interlayer film was measured by use of a "Contact Surface Roughness Measuring Instrument Surfcorder SE-40D" manufactured by Kosaka Laboratory Ltd. and was calculated in accordance with JIS B0611 using a standard length of 8 mm.

(Haze test of laminated glass)

A laminated glass sample was left standing in a constant temperature/humidity, dark chamber at 23°C, 50%RH for 48 hours. Then, the haze of the laminated glass was measured in accordance with JIS K7105 (1981) "Testing methods for optical properties of plastics" by use of a haze meter (Model TC-H3PP, manufactured by Tokyo Denshoku Co., Ltd.). The test was carried out in a constant temperature/humidity chamber at 23°C, 50%RH.

The results of Examples 1 to 4 are shown in Table 1 and the results of Comparative Examples 1 to 12 are shown in Table 2. The results of Examples 5 to 8 are shown in Table 3 and the results of Comparative Examples 13 to 18 are shown in Table 4. The results of Examples 9 and 10 are shown in Table 5, the results of Comparative Examples 19 to 22 are shown in Table 6, and the results of Examples 11 and 12 are shown in Table 7. The results of Examples 13 and 14 are shown in Table 8 and the results of Comparative Examples 23 to 28 are shown in Table 9. The results of Examples 15 and 16 are shown in Table 10 and the results of Comparative Examples 29 to 34 are shown in Table 11.

Table 1

| | | Example 1 | Example 2 | Example 3 | Example 4 |
|---|---|---|---|---|---|
| Amount of warp of laminated glass (mm) | Side (1) | 0.04 | 0.08 | 0.03 | 0.06 |
| | Side (2) | 0.09 | 0.07 | 0.03 | 0.08 |
| | Side (3) | 0.01 | 0.04 | 0.04 | 0.11 |
| | Side (4) | 0.05 | 0.08 | 0.07 | 0.06 |
| Ten-point height of roughness | First interlayer film | 2.1 | 1.5 | 1.7 | 1.2 |
| | Second interlayer film | 1.7 | 2.5 | 1.9 | 2.1 |
| Delamination at the interface between an interlayer film and a plastic sheet | | No | No | No | No |
| Delamination at the interface between an interlayer film and an inorganic glass sheet | | No | No | No | No |
| Delamination at the interface between the first interlayer film and the second interlayer film | | No | No | No | No |
| Haze of Laminated Glass (%) | | 0.8 | 0.9 | 0.9 | 0.8 |

Table 2

| | | Comparative Example 1 | Comparative Example 2 | Comparative Example 3 | Comparative Example 4 | Comparative Example 5 | Comparative Example 6 |
|---|---|---|---|---|---|---|---|
| Amount of warp of laminated glass (mm) | Side (1) | 0.05 | 0.05 | 1.01 | 0.07 | 0.09 | 0.98 |
| | Side (2) | 0.07 | 0.08 | 1.13 | 0.08 | 0.05 | 1.26 |
| | Side (3) | 0.03 | 0.12 | 1.15 | 0.07 | 0.05 | 1.15 |
| | Side (4) | 0.06 | 0.04 | 1.15 | 0.09 | 0.07 | 1.22 |
| Delamination at the interface between an interlayer film and a plastic sheet | | Yes | Yes | No | Yes | Yes | No |
| Delamination at the interface between an interlayer film and an inorganic glass sheet | | Yes | Yes | No | Yes | Yes | No |
| Haze of Laminated Glass (%) | | 63.5 | 57.8 | 0.9 | 60.4 | 53.9 | 0.8 |

| | | Comparative Example 7 | Comparative Example 8 | Comparative Example 9 | Comparative Example 10 | Comparative Example 11 | Comparative Example 12 |
|---|---|---|---|---|---|---|---|
| Amount of warp of laminated glass (mm) | Side (1) | 0.04 | 0.07 | 1.18 | 0.04 | 0.08 | 1.26 |
| | Side (2) | 0.12 | 0.04 | 1.05 | 0.03 | 0.04 | 1.04 |
| | Side (3) | 0.08 | 0.05 | 1.25 | 0.08 | 0.06 | 1.25 |
| | Side (4) | 0.09 | 0.10 | 1.13 | 0.04 | 0.06 | 1.12 |
| Delamination at the interface between an interlayer film and a plastic sheet | | Yes | Yes | No | Yes | Yes | No |
| Delamination at the interface between an interlayer film and an inorganic glass sheet | | Yes | Yes | No | Yes | Yes | No |
| Haze of Laminated Glass (%) | | 66.0 | 62.1 | 0.9 | 65.2 | 60.7 | 1.1 |

Table 3

| | | Example 5 | Example 6 | Example 7 | Example 8 |
|---|---|---|---|---|---|
| Amount of warp of laminated glass (mm) | Side (1) | 0.10 | 0.09 | 0.06 | 0.06 |
| | Side (2) | 0.04 | 0.07 | 0.07 | 0.05 |
| | Side (3) | 0.09 | 0.05 | 0.14 | 0.05 |
| | Side (4) | 0.06 | 0.05 | 0.10 | 0.08 |
| Ten-point height of roughness | First interlayer film | 1.7 | 2.4 | 2.0 | 1.9 |
| | Second interlayer film | 2.1 | 1.8 | 2.7 | 2.0 |
| Delamination at the interface between an interlayer film and a plastic sheet | | No | No | No | No |
| Delamination at the interface between an interlayer film and an inorganic glass sheet | | No | No | No | No |
| Delamination at the interface between the first interlayer film and the second interlayer film | | No | No | No | No |
| Haze of Laminated Glass (%) | | 0.9 | 0.9 | 0.9 | 0.9 |

Table 4

| | | Comparative Example 13 | Comparative Example 14 | Comparative Example 15 | Comparative Example 16 | Comparative Example 17 | Comparative Example 18 |
|---|---|---|---|---|---|---|---|
| Amount of warp of laminated glass (mm) | Side (1) | 0.06 | 0.04 | 1.34 | 0.03 | 0.09 | 1.30 |
| | Side (2) | 0.09 | 0.07 | 1.21 | 0.09 | 0.05 | 1.19 |
| | Side (3) | 0.07 | 0.06 | 1.38 | 0.07 | 0.04 | 1.28 |
| | Side (4) | 0.07 | 0.05 | 1.25 | 0.06 | 0.05 | 1.14 |
| Delamination at the interface between an interlayer film and a plastic sheet | | Yes | Yes | No | Yes | Yes | No |
| Delamination at the interface between an interlayer film and an inorganic glass sheet | | Yes | Yes | No | Yes | Yes | No |
| Haze of Laminated Glass (%) | | 61.6 | 55.0 | 1.0 | 62.4 | 57.1 | 0.8 |

Table 5

| | | Example 9 | Example 10 |
|---|---|---|---|
| Amount of warp of laminated glass (mm) | Side (1) | 0.10 | 0.06 |
| | Side (2) | 0.04 | 0.06 |
| | Side (3) | 0.05 | 0.04 |
| | Side (4) | 0.05 | 0.03 |
| Ten-point height of roughness | First interlayer film | 2.2 | 2.5 |
| | Second interlayer film | 2.6 | 1.9 |
| Delamination at the interface between an interlayer film and a plastic sheet | | No | No |
| Delamination at the interface between an interlayer film and an inorganic glass sheet | | No | No |
| Delamination at the interface between the first interlayer film and the second interlayer film | | No | No |
| Haze of Laminated Glass (%) | | 0.8 | 0.8 |

Table 6

| | | Comparative Example 19 | Comparative Example 20 | Comparative Example 21 | Comparative Example 22 |
|---|---|---|---|---|---|
| Amount of warp of laminated glass (mm) | Side (1) | 0.03 | 0.79 | 0.05 | 0.78 |
| | Side (2) | 0.08 | 0.65 | 0.05 | 0.71 |
| | Side (3) | 0.05 | 0.75 | 0.09 | 0.72 |
| | Side (4) | 0.03 | 0.66 | 0.04 | 0.68 |
| Ten-point height of roughness | First interlayer film | 1.9 | 1.8 | 1.8 | 2.0 |
| | Second interlayer film | 2.3 | 2.2 | 2.5 | 2.5 |
| Delamination at the interface between an interlayer film and a plastic sheet | | Yes | No | Yes | No |
| Delamination at the interface between an interlayer film and an inorganic glass sheet | | Yes | No | Yes | No |
| Haze of Laminated Glass (%) | | 0.8 | 0.9 | 0.8 | 0.8 |

Table 7

| | | Example 11 | Example 12 |
|---|---|---|---|
| Amount of warp of laminated glass (mm) | Side (1) | 0.02 | 0.05 |
| | Side (2) | 0.07 | 0.08 |
| | Side (3) | 0.04 | 0.06 |
| | Side (4) | 0.04 | 0.07 |
| Ten-point height of roughness | First interlayer film | 63.4 | 62.8 |
| | Second interlayer film | 70.8 | 67.1 |
| Delamination at the interface between an interlayer film and a plastic sheet | | No | No |

(continued)

| | Example 11 | Example 12 |
|---|---|---|
| Delamination at the interface between an interlayer film and an inorganic glass sheet | No | No |
| Delamination at the interface between the first interlayer film and the second interlayer film | No | No |
| Haze of Laminated Glass (%) | 11.5 | 7.9 |

Table 8

| | | Example 13 | Example 14 |
|---|---|---|---|
| Amount of warp of laminated glass (mm) | Side (1) | 0.05 | 0.04 |
| | Side (2) | 0.06 | 0.08 |
| | Side (3) | 0.06 | 0.06 |
| | Side (4) | 0.07 | 0.02 |
| Ten-point height of roughness | First interlayer film | 2.2 | 1.5 |
| | Second interlayer film | 2.6 | 2.3 |
| Delamination at the interface between an interlayer film and a plastic sheet | | No | No |
| Delamination at the interface between an interlayer film and an inorganic glass sheet | | No | No |
| Delamination at the interface between the first interlayer film and the second interlayer film | | No | No |
| Haze of Laminated Glass (%) | | 0.6 | 0.6 |

Table 9

| | | Comparative Example 23 | Comparative Example 24 | Comparative Example 25 | Comparative Example 26 | Comparative Example 27 | Comparative Example 28 |
|---|---|---|---|---|---|---|---|
| Amount of warp of laminated glass (mm) | Side (1) | 0.09 | 0.08 | 0.86 | 0.07 | 0.11 | 0.85 |
| | Side (2) | 0.10 | 0.05 | 0.71 | 0.08 | 0.06 | 0.72 |
| | Side (3) | 0.08 | 0.06 | 0.88 | 0.05 | 0.09 | 0.74 |
| | Side (4) | 0.07 | 0.03 | 0.69 | 0.06 | 0.05 | 0.76 |
| Delamination at the interface between an interlayer film and a plastic sheet | | yes | Yes | No | Yes | Yes | No |
| Delamination at the interface between an interlayer film and an inorganic glass sheet | | Yes | Yes | No | Yes | Yes | No |
| Haze of Laminated Glass(%) | | 38.1 | 37.4 | 0.6 | 38.6 | 37.3 | 0.6 |

Table 10

| | | Example 15 | Example 16 |
|---|---|---|---|
| Amount of warp of laminated glass (mm) | Side (1) | 0.13 | 0.07 |
| | Side (2) | 0.05 | 0.04 |
| | Side (3) | 0.04 | 0.03 |
| | Side (4) | 0.09 | 0.07 |
| Ten-point height of roughness | First interlayer film | 2.4 | 1.8 |
| | Second interlayer film | 1.9 | 1.5 |
| Delamination at the interface between an interlayer film and a plastic sheet | | No | No |
| Delamination at the interface between an interlayer film and an inorganic glass sheet | | No | No |
| Delamination at the interface between the first interlayer film and the second interlayer film | | No | No |
| Haze of Laminated Glass (%) | | 0.7 | 0.7 |

Table 11

| | | Comparative Example 29 | Comparative Example 30 | Comparative Example 31 | Comparative Example 32 | Comparative Example 33 | Comparative Example 34 |
|---|---|---|---|---|---|---|---|
| Amount of warp of laminated glass (mm) | Side (1) | 0.06 | 0.08 | 0.85 | 0.05 | 0.09 | 0.81 |
| | Side (2) | 0.05 | 0.08 | 0.79 | 0.08 | 0.10 | 0.72 |
| | Side (3) | 0.04 | 0.06 | 0.85 | 0.07 | 0.07 | 0.86 |
| | Side (4) | 0.06 | 0.04 | 0.74 | 0.09 | 0.03 | 0.77 |
| Delamination at the interface between an interlayer film and a plastic sheet | | Yes | Yes | No | Yes | Yes | No |
| Delamination at the interface between an interlayer film and an inorganic glass sheet | | Yes | Yes | No | Yes | Yes | No |
| Haze of Laminated Glass (%) | | 39.2 | 37.8 | 0.6 | 37.7 | 36.1 | 0.6 |

Tables 1 to 11 show that each laminated glass of the Examples has no warp, high transparency, favorable adhesion between an interlayer film and a plastic sheet, and favorable adhesion between an interlayer film and an inorganic glass sheet, and these laminated glasses are therefore superior to those of the Comparative Examples.

Next, Examples 17 to 20 are shown as examples of the second producingprocess, and laminated glasses produced by this process and Comparative Examples 35 to 38 are shown as comparative examples corresponding to the Examples.

(Example 17)

(Thermocompression Bonding of Laminated Glass)

A polycarbonate sheet (manufactured by Nippon Testpanel Co., Ltd., 300 mm × 300 mm × 2 mm), an ethylene-vinyl acetate copolymer resin film (EN film manufactured by Sekisui Chemical Co., Ltd., average thickness of 2.4 mm) and a transparent inorganic glass sheet (manufactured by Nippon Testpanel Co., Ltd., 300 mm × 300 mm × 2.5 mm) were laminated in this order, and they were fastened with a heat-resistant tape so as not to slide. Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature of the outer surface of the polycarbonate sheet reached 100°C, the vacuum bag was held for 20 minutes.

(Method of Cooling after Thermocompression Bonding)

After thermocompression bonding as mentioned above, the electric power source for heating was shut off to start cooling treatment. A laminated glass was produced by pressing polyethylene bags containing ice water against the top and bottom surfaces of a vacuum bag to cool the vacuum bag rapidly.

The temperatures of the polycarbonate sheet and the transparent inorganic glass sheet after a lapse of predetermined time from the start of the cooling treatment are as shown in Table 12.

(Example 18)

A laminated glass was produced in the same manner as Example 17 except that the ultimate temperature in the thermocompression bonding was 120°C instead of 100°C.

(Comparative Example 35)

(Method of Cooling after Thermocompression Bonding)

After thermocompression bonding by the same procedure as Example 17, the electric power source for heating was shut off to start cooling treatment. A laminated glass was produced by exposing the vacuum bag of the vacuum lamination machine to the normal temperature atmosphere to cool the vacuum bag.

The temperatures of the polycarbonate sheet and the transparent inorganic glass sheet after a lapse of predetermined time from the start of the cooling treatment are as shown in Table 13.

(Comparative Example 36)

(Method of Cooling after Thermocompression Bonding)

After thermocompression bonding by the same operation as Example 17, the electric power source for heating was shut off to start cooling treatment. The door provided in the vacuum lamination machine was kept closed so that the heat was released to the outside of the machine as slowly as possible. In such method, the cooling of the laminated glass was carried out by taking enough time. After making sure that the temperature of the surface of the inorganic glass became lower than 40°C, the pressure was returned to normal pressure and the resultant laminated glass was taken out from the vacuum bag.

(Example 19)

A laminated glass was produced in the same manner as Example 17 except that a polyurethane resin film (manufactured by Morton Co., Ltd., average film thickness of 0.61 mm) was used instead of the ethylene-vinyl acetate copolymer resin film.

(Comparative Example 37)

A laminated glass was produced in the same manner as Comparative Example 35 except that a polyurethane resin film (manufactured by Morton Co., Ltd., average film thickness of 0. 61 mm) was used instead of the ethylene-vinyl acetate copolymer resin film.

(Example 20)

(Preparation of ethylene-acrylate copolymer resin film)

A quantity of 100 parts by weight of ethylene- (meta) acrylic acid ester copolymer having a methacrylic acid ester content of 20% by weight (manufactured by Sumitomo Chemical Co., Ltd., Acryft WH202) and 0.2 parts by weight of N-(2-aminoethyl)3-aminopropylmethyldimethoxysilane (manufactured by Chisso Corp., Sila-Ace S310) were fed to a roll mill and melt-kneaded at 150°C to produce a roll sheet. Subsequently, the roll sheet was sandwiched between 100 μm-thick release PET films and press-molded by pressing at 150°C and a load of 100 kgf/cm$^2$ while a spacer was placed therearound. Then, the release PET films were removed to yield an ethylene-acrylate copolymer resin film having an average thickness of 2.1 mm.

(Production of Laminated Glass)

A laminated glass was produced in the same manner as Example 17 except that the ethylene-acrylate copolymer resin film prepared in the method mentioned above was used instead of the ethylene-vinyl acetate copolymer resin film.

(Comparative Example 38)

A laminated glass was produced in the same manner as Comparative Example 35 except that an ethylene-acrylate copolymer resin film prepared by the procedure as in Example 20 was used instead of the ethylene-vinyl acetate copolymer resin film.

(Test Example 2)

In Examples 17 to 20 and Comparative Examples 35 to 38, the temperatures of a polycarbonate sheet and an inorganic glass sheet in cooling treatment were measured in accordance with an evaluation method given below. The results are shown in Table 12.

Moreover, the extrapolated end temperature of crystallization (Tec) and the onset temperature of crystallization (Tic) of the ethylene-vinyl acetate copolymer resin film used as an interlayer film in Examples 17 and 18 and Comparative Examples 35 and 36 were measured in accordance with an evaluation method given below. The results are shown in Table 12.

For each laminated glass obtained in Examples 17 to 20 and Comparative Examples 35 to 38, the amount of warp, perspective distortion, and haze were measured in accordance with the following evaluation methods. The results are shown in Tables 12 and 13.

(Evaluation method)

(Method for measuring temperature in cooling treatment of polycarbonate sheet and inorganic glass sheet)

In Examples 17 to 20 and Comparative Examples 35 to 38, the temperatures of a polycarbonate sheet and an inorganic glass sheet in a cooling treatment were measured with thermo couples stuck, with a heat-resistant tape, on surfaces of the sheets opposite to the surfaces to which an interlayer film was to be adhered.

(Method for measuring crystallization temperature of ethylene-vinyl acetate copolymer resin film)

A thin piece of an ethylene-vinyl acetate copolymer resin film was conditioned in a constant temperature/humidity chamber at 23°C, 50%RH for 48 hours. Then, using a differential scanning calorimeter (DSC8230, manufactured by Rigaku Corporation), an extrapolated end temperature of crystallization (Tec) measured at a cooling rate of 5°C/min and an onset temperature of crystallization (Tic) of an ethylene-vinyl acetate copolymer resin film were measured at a nitrogen gas flow rate of 20 ml in accordance with JIS K7121 (1987) "Testing methods for transition temperature of plastics".

(Method for evaluating the amount of warp of laminated glass)

A laminated glass was stored in a constant temperature/humidity chamber at 20°C, 50%RH for 24 hours. Subsequently, according to JIS R3213 (1998), a laminated glass warping like an arch was stood perpendicularly on a smooth steel plate. A ruler was put on the laminated glass horizontally and the amount of warp was measured with a clearance gauge.

(Method for measuring perspective distortion of laminated glass)

Using a method according to JIS R3213 (1998), the maximum and minimum amounts of deformation of a circle projected on a screen were measured with a digital caliper. A laminated glass sample was mounted at an inclination angle of 45°, and a region excluding the peripheral portion to 50 mm from the edge of the laminated glass was defined as a measurement region. From the measured maximum and minimum amounts of deformation, a maximum value of perspective distortion was calculated from the following formula described in JIS R3212 (1998).

$$\Delta(\alpha) = \Delta d/(0.29 \times R_2),\ R_2 = 4$$

$\Delta(\alpha)$ is a perspective distortion (minute).
$\Delta d$ is an amount (mm) of the maximum deformation.
$R_2$ is a distance (m) between a laminated glass sample and a screen.

(Haze test of laminated glass)

A laminated glass sample was left standing in a constant temperature/humidity, dark chamber at 23°C, 50%RH for 48 hours. Then, the haze of the laminated glass was measured in accordance with JIS K7105 (1981) "Testing methods for optical properties of plastics" by use of a haze meter (Model TC-H3PP, manufactured by Tokyo Denshoku Co., Ltd.). The test was carried out in a constant temperature/humidity chamber at 23°C, 50%RH.

Table 12

| | | Example 17 | Example 18 | Example 19 | Example 20 |
|---|---|---|---|---|---|
| Interlayer film | Kind | Ethylene-vinyl acetate copolymer resin film | Ethylene-vinyl acetate copolymer resin film | Polyurethane resin film | Ethylene-acrylate copolymer resin film |
| | Extrapolated end temperature of crystallization (Tec), °C | 71.6 | 71.6 | - | - |
| | Onset temperature of crystallization (Tic), °C | 65.8 | 65.8 | - | - |

(continued)

| | | Example 17 | Example 18 | Example 19 | Example 20 |
|---|---|---|---|---|---|
| Temperature in cooling treatment of polycarbonate sheet (°C) | Just after start of treatment | 88.1 | 110.4 | 87.5 | 88.6 |
| | 30 sec. after start of treatment | 52.5 | 70.3 | 51.8 | 52.4 |
| | 60 sec. after start of treatment | 36.4 | 43.5 | 35.4 | 36.8 |
| | 90 sec. after start of treatment | 31.9 | 35.9 | 31.3 | 32.3 |
| | 120 sec. after start of treatment | 30.2 | 32.7 | 30.8 | 31.9 |
| Temperature in cooling treatment of inorganic glass sheet (°C) | Just after start of treatment | 100.0 | 120.0 | 100.0 | 100.0 |
| | 30 sec. after start of treatment | 59.0 | 84.9 | 59.7 | 60.5 |
| | of 60 sec. after start of treatment | 42.1 | 60.3 | 41.5 | 42.3 |
| | 90 sec. after start of treatment | 35.7 | 46.9 | 35.8 | 36.8 |
| | 120 sec. after start of treatment | 33.6 | 39.7 | 33.9 | 34.7 |
| Amount of warp of laminated glass (mm) | Side (1) | 0.13 | 0.17 | 0.37 | 0.17 |
| | Side (2) | 0.16 | 0.18 | 0.41 | 0.14 |
| | Side (3) | 0.12 | 0.16 | 0.35 | 0.16 |
| | Side (1) | 0.13 | 0.21 | 0.44 | 0.17 |
| Perspective distortion (min) | | 1.48 | 1.56 | 1.79 | 1.46 |
| Haze of laminated glass (%) | | 0.9 | 0.8 | - | - |

Table 13

| | | Comparative Example 35 | Comparative Example 36 | Comparative Example 37 | Comparative Example 38 |
|---|---|---|---|---|---|
| Interlayer film | Kind | Ethylene-vinyl acetate copolymer resin film | Ethylene-vinyl acetate copolymer resin film | Polyurethane resin film | Ethylene-acrylate copolymer resin film |
| | Extrapolated end temperature of crystallization (Tec), °C | 71.6 | 71.6 | - | - |
| | Onset temperature of crystallization (Tic), °C | 65.8 | 65.8 | - | - |

(continued)

| | | Comparative Example 35 | Comparative Example 36 | Comparative Example 37 | Comparative Example 38 |
|---|---|---|---|---|---|
| Temperature in cooling treatment of polycarbonate sheet (°C) | Just after start of treatment | 86.3 | 87.9 | 86.6 | 87.4 |
| | 5 min. after start of treatment | 59.3 | 82.1 | 56.1 | 56.9 |
| | 10 min. after start of treatment | 45.6 | 73.6 | 46.0 | 46.3 |
| | 20 min. after start of treatment | 36.8 | 63.0 | 37.4 | 38.1 |
| | 30 min. after start of treatment | 34.2 | 57.3 | 35.5 | 36.3 |
| Temperature in cooling treatment of inorganic glass sheet (°C) | Just after start of treatment | 100.0 | 100.0 | 100.0 | 100.0 |
| | 5 min. after start of treatment | 75.9 | 96.4 | 75.4 | 76.1 |
| | 10 min. after start of treatment | 63.3 | 90.6 | 62.8 | 63.4 |
| | 20 min. after start of treatment | 53.4 | 83.1 | 51.8 | 52.6 |
| | 30 min. after start of treatment | 47.8 | 76.1 | 48.1 | 48.4 |
| Amount of warp of laminated glass (mm) | Side (1) | 0.25 | 0.38 | 0.66 | 0.24 |
| | Side (2) | 0.22 | 0.34 | 0.84 | 0.27 |
| | Side (3) | 0.31 | 0.36 | 0.76 | 0.25 |
| | Side (4) | 0.27 | 0.39 | 0.72 | 0.34 |
| Perspective distortion (min) | | 1.76 | 1.95 | 5.48 | 1.60 |
| Haze of laminated glass (%) | | 1.4 | 1.4 | - | - |

Tables 12 and 13 show that each laminated glass obtained by the processes of Examples 17 to 20 of the present invention are less warped, exhibit almost no perspective distortion, and have lower haze values, compared to each laminated glass of Comparative Examples 35 to 38,

Next, Examples 21 to 26 are shown as examples of the third laminated glass and Comparative Examples 39 to 44 are shown as comparative examples corresponding to the Examples.

(Example 21)

A polycarbonate sheet (manufactured by Nippon Testpanel Co., Ltd., 300 mm × 300 mm × 2 mm), an ethylene-vinyl acetate copolymer resin film (EN film manufactured by Sekisui Chemical Co., Ltd., average thickness of 2.4 mm) and a transparent inorganic glass sheet (manufactured by Nippon Testpanel Co., Ltd., 300 mm × 300 mm × 2.5 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degas sed condition. After the temperature reached 100°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Example 22)

A polycarbonate sheet (manufactured by Nippon Testpanel Co., Ltd., 300 mm × 300 mm × 2 mm), six layers of ethylene-vinyl acetate copolymer resin film (EN film manufactured by Sekisui Chemical Co., Ltd., average thickness of 0.37 mm) and a transparent inorganic glass sheet (manufactured by Nippon Testpanel Co., Ltd., 300 mm × 300 mm × 2.5 mm) were piled up in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Example 23)

A polycarbonate sheet (manufactured by Nippon Testpanel Co., Ltd., 300 mm × 300 mm × 2 mm), four layers of polyurethane resin film (manufactured by Morton Co., Ltd., average thickness of 0.61 mm per film) and a transparent inorganic glass sheet (manufactured by Nippon Testpanel Co., Ltd., 300 mm × 300 mm × 2.5 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bagwas heated to 100°Cwhile keeping the degassed condition. After the temperature reached 100°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Example 24)

(Preparation of ethylene-acrylate copolymer resin film)

A quantity of 100 parts by weight of ethylene- (meta) acrylic acid ester copolymer having a methacrylic acid ester content of 20% by weight (manufactured by Sumitomo Chemical Co., Ltd., Acryft WH202) and 0.2 part by weight of N-(2-aminoethyl)-3-aminopropylmethyldimethoxysilane (manufactured by Chisso Corp., Sila-Ace S310) were fed to a roll mill and melt-kneaded at 150°C, thereby to obtain a roll sheet. Subsequently, the roll sheet was sandwiched between 100 μm-thick release PET films and press-molded by pressing at 150°C under a pressure of 100 kgf/cm$^2$ while a spacer was placed therearound. Then, the release PET films were removed to yield an ethylene-acrylate copolymer resin film having an average thickness of 2.1 mm.

(Production of Laminated Glass)

The resultant ethylene-acrylate copolymer resin sheet was sandwiched between a polycarbonate sheet (manufactured by Nippon Testpanel Co., Ltd., 300 mm × 300 mm × 2 mm) and a transparent inorganic glass sheet (manufactured by Nippon Testpanel Co., Ltd., 300 mm × 300 mm × 2.5 mm), so that the film and the sheets were laminated, and then they were fastened with aheat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bag was heated to 100°C while keeping the degassed condition. After the temperature reached 100°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Example 25)

A polycarbonate sheet (manufactured by Nippon Testpanel Co., Ltd., 300 mm × 300 mm × 2 mm), an ethylene-vinyl acetate copolymer resin film (EN film manufactured by Sekisui Chemical Co., Ltd., average thickness of 2.4 mm) and a transparent inorganic glass sheet (manufactured by Nippon Testpanel Co., Ltd., 300 mm × 300 mm × 2.5 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bagwas heated to 130°C while keeping the degassed condition. After the temperature reached 130°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Example 26)

A polycarbonate sheet (manufactured by Nippon Testpanel Co., Ltd., 300 mm × 300 mm × 2 mm), an ethylene-vinyl acetate copolymer resin film (EN film manufactured by Sekisui Chemical Co., Ltd., average thickness of 4.3 mm) and a transparent inorganic glass sheet (manufactured by Nippon Testpanel Co., Ltd., 300 mm × 300 mm × 2.5 mm) were laminated in this order, and they were fastened with a heat-resistant tape so as not to slide.

Subsequently, the resultant laminated product was placed in a rubber bag of a vacuum laminator (manufactured by Hi-Tech Engineering Co., Ltd.), and the rubber bag was degassed for 10 minutes at normal temperature under a vacuum pressure of 70 cmHg. Then, the vacuum bagwas heated to 130°C while keeping the degassed condition. After the temperature reached 130°C, the vacuum bag was held for 20 minutes. Then, the vacuum bag was cooled spontaneously. After making sure that the temperature of the rubber bag had fallen to 30°C, the pressure was released to normal pressure to obtain a laminated glass.

(Comparative Example 39)

A laminated glass was produced in the same manner as Example 21 except that an ethylene-vinyl acetate copolymer resin film with an average thickness of 0.4 mm (EN film manufactured by Sekisui Chemical Co., Ltd.) was used instead of the ethylene-vinyl acetate copolymer resin film having an average thickness of 2.4 mm.

(Comparative Example 40)

A laminated glass was produced in the same manner as Example 21 except that an ethylene-vinyl acetate copolymer resin film having an average thickness of 0.8 mm (EN film manufactured by Sekisui Chemical Co., Ltd.) was used instead of the ethylene-vinyl acetate copolymer resin film having an average thickness of 2.4 mm.

(Comparative Example 41)

A laminated glass was produced in the same manner as Example 21 except that a polyurethane resin film having an average thickness of 0.61 mm (EN manufactured by Morton Co., Ltd.) was used instead of the ethylene-vinyl acetate copolymer resin film having an average thickness of 2.4 mm.

(Comparative Example 42)

An ethylene-acrylate copolymer resin film having an average thickness of 0.8 mm was produced in the same manner as Example 4. A laminated glass was produced in the same manner as Example 24 except that the resultant ethylene-acrylate copolymer resin film having a thickness of 0.8 mm was used.

(Comparative Example 43)

A laminated glass was produced in the same manner as Comparative Example 40 except that the thermocompression bonding temperature was changed to 130°C.

(Comparative Example 44)

A laminated glass was produced in the same manner as Comparative Example 42 except that the thermocompression bonding temperature was changed to 130°C.

(Test Example 3)

For each laminated glass of Examples 21 to 26 and Comparative Examples 39 to 44, the amount of warp and the perspective distortion of the laminated glass were evaluated in accordance with the following evaluation methods.

(Evaluation method)

(Method for evaluating the amount of warp of laminated glass)

A laminated glass was left standing in a constant temperature/humidity chamber at 20°C, 50%RH for 24 hours. Subsequently, according to JIS R3213 (1998), a laminated glass warping like an arch was stood perpendicularly on a smooth steel plate. A ruler was put on the laminated glass horizontally and the amount of warp was measured with a clearance gauge.

(Method for measuring perspective distortion of laminated glass)

Using a method according to JIS R3213 (1998), the maximum and minimum amounts of deformation of a circle projected on a screen were measured with a digital caliper. A laminated glass sample was mounted at an inclination angle of 45° and a region excluding the peripheral portion to 50 mm from the edge of the laminated glass was defined as a measurement region. From the measured maximum and minimum amounts of deformation, a maximum value of perspective distortion was calculatedfrom the following formula described in JIS R3212 (1998).

$$\Delta(\alpha) = \Delta d/(0.29 \times R_2),\ R_2 = 4$$

$\Delta(\alpha)$ is a perspective distortion (minute).
$\Delta d$ is an amount (mm) of the maximum deformation.
$R_2$ is a distance (m) between a laminated glass sample and a screen.

The results of Examples 21 to 26 are shown in Table 14 and the results of Comparative Examples 39 to 44 are shown in Table 15.

Table 14

| | | Example 21 | Example 22 | Example 23 | Example 24 | Example 25 | Example 26 |
|---|---|---|---|---|---|---|---|
| Interlayer film resin | | Ethylene-vinyl acetate copolymer resin film | Ethylene-vinyl acetate copolymer resin film | polyurethane resin film | Ethylene-acrylate copolymer resin film | Ethylene-vinyl acetate copolymer resin film | Ethylene-vinyl acetate copolymer resin film |
| Interlayer film thickness (mm) | | 2.4 | 2.2 | 2.4 | 2.1 | 2.4 | 4.3 |
| Thermocompression bonding temperature (°C) | | 100 | 100 | 100 | 100 | 130 | 130 |
| Amount of warp of laminated glass (mm) | Side (1) | 0.25 | 0.26 | 0.28 | 0.24 | 0.35 | 0.28 |
| | Side (2) | 0.22 | 0.27 | 0.30 | 0.27 | 0.30 | 0.26 |
| | Side (3) | 0.31 | 0.24 | 0.23 | 0.25 | 0.23 | 0.21 |
| | Side (4) | 0.27 | 0.29 | 0.23 | 0.34 | 0.25 | 0.26 |
| Perspective distortion (min) | | 1.76 | 1.55 | 1.65 | 1.60 | 1.73 | 1.64 |

Table 15

| | | Comparative Example 39 | Comparative Example 40 | Comparative Example 41 | Comparative Example 42 | Comparative Example 43 | Comparative Example 44 |
|---|---|---|---|---|---|---|---|
| Interlayer film resin | | Ethylene-vinyl acetate copolymer resin film | Ethylene-vinyl acetate copolymer resin film | Polyurethane resin film | Ethylene-acrylate copolymer resin film | Ethylene-vinyl acetate copolymer resin film | Ethylene-acrylate copolymer resin film |
| Interlayer film thickness (mm) film | | 0.4 | 0.8 | 0.6 | 0.8 | 0.8 | 0.8 |
| Thermocompression bonding temperature (°C) | | 100 | 100 | 100 | 100 | 130 | 130 |
| Amount of warp of laminated glass (mm) | Side (1) | 1.12 | 1.21 | 0.66 | 1.15 | 1.44 | 1.37 |
| | Side (2) | 1.17 | 0.95 | 0.84 | 1.20 | 1.50 | 1.52 |
| | Side (3) | 1.05 | 1.18 | 0.76 | 1.07 | 1.58 | 1.55 |
| | Side (1) | 1.08 | 1.04 | 0.72 | 1.16 | 1.47 | 1.43 |
| Perspective distortion (min) | | 5.46 | 5.23 | 5.48 | 5.39 | 7.80 | 7.12 |

Tables 14 and 15 show that each laminated glass of Examples 21 to 26 of the present invention is less warped than each laminated glass of Comparative Examples 39 to 44 and exhibits almost no perspective distortion.

Industrial Applicability

The present invention can provide a laminated glass composed partly of plastic sheet, which is useful as a windowpane installed in buildings, automobiles, railway vehicles, airplanes, ships, etc.

## Claims

1. A process for producing a laminated glass, which comprises the step of laminating a plastic sheet having the first interlayer film adhered to one side thereof and an inorganic glass sheet having the second interlayer film adhered to one side thereof through the interposed first and second interlayer films.

2. The process for producing a laminated glass according to claim 1, wherein each of the first and second interlayer films has a ten-point average surface roughness of not more than 10 μm.

3. The process for producing a laminated glass according to claim 1 or 2, wherein the step of laminating is carried out at a temperature not exceeding 80°C.

4. The process for producing a laminated glass according to any one of claims 1 to 3, wherein the inorganic glass sheet having the second interlayer film adhered to one side thereof is produced by adhering an inorganic glass sheet, in which a silane coupling agent is coated to one side thereof, to the second interlayer film through the interposed silane coupling agent.

5. The process for producing a laminated glass according to any one of claims 1 to 4, wherein each of the first and second interlayer films is a thermoplastic elastomer resin film.

6. The process for producing a laminated glass according to claim 5, wherein the thermoplastic elastomer resin film is an ethylene-vinyl acetate copolymer resin film.

7. The process for producing a laminated glass according to claim 6, wherein the vinyl acetate content in the ethylene-vinyl acetate copolymer resin constituting the ethylene-vinyl acetate copolymer resin film is 20 to 40% by weight as measured in accordance with JIS K6730 entitled "Testing method for ethylene-vinyl acetate resin".

8. The process for producing a laminated glass according to claim 6 or 7, wherein the silane coupling agent is contained in an amount of 0.01 to 4 parts by weight based on 100 parts by weight of the ethylene-vinyl acetate copolymer resin film.

9. The process for producing a laminated glass according to any one of claims 6 to 8, wherein a tackifier is contained in an amount of 1 to 40 parts by weight based on 100 parts by weight of the ethylene-vinyl acetate copolymer resin film.

10. The process for producing a laminated glass according to any one of claims 6 to 9, wherein a nucleating agent is contained in an amount of 0.01 to 4 parts by weight based on 100 parts by weight of the ethylene-vinyl acetate copolymer resin film.

11. The process for producing a laminated glass according to claim 5, wherein the thermoplastic elastomer resin film is an ethylene-acrylate copolymer resin film.

12. The process for producing a laminated glass according to claim 11, wherein the ethylene-acrylate copolymer resin film is one member selected from the group consisting of ethylene-methyl acrylate copolymer resin, ethylene-ethyl acrylate copolymer resin and ethylene-butyl acrylate copolymer resin films.

13. The process for producing a laminated glass according to claim 5, wherein the thermoplastic elastomer resin film is a thermoplastic polyurethane resin film which may contain sulfur element.

14. The process for producing a laminated glass according to claim 5, wherein the thermoplastic elastomer resin film is a plasticized polyvinyl acetal resin film.

**15.** The process for producing a laminated glass according to any one of claims 1 to 14, wherein the plastic sheet has a coefficient of linear thermal expansion of not less than $5\times10^{-5}$ cm/cm·°C but not more than $10\times10^{-5}$ cm/cm·°C.

**16.** The process for producing a laminated glass according to any one of claims 1 to 14, wherein the plastic sheet is a polycarbonate sheet and a coefficient of linear thermal expansion of the polycarbonate sheet is not less than $5\times10^{-5}$ cm/cm·°C but not more than $8\times10^{-5}$ cm/cm·°C.

**17.** The process for producing a laminated glass according to any one of claims 1 to 14, wherein the plastic sheet is a polymethyl methacrylate sheet and the coefficient of linear thermal expansion of the polymethyl methacrylate sheet is not less than $5\times10^{-5}$ cm/cm·°C but not more than $10\times10^{-5}$ cm/cm·°C.

**18.** The process for producing a laminated glass according to any one of claims 1 to 17, wherein the coefficient of linear thermal expansion of the inorganic glass sheet is not less than $0.01\times10^{-6}$ cm/cm·°C but not more than $100\times10^{-6}$ cm/cm·°C.

**19.** A laminated glass which is produced by the process according to any one of claims 1 to 18.

**20.** A process for producing a laminated glass which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by thermocompression bonding, down to 60°C at an average cooling rate of not less than 30°C/min but not more than 500°C/min.

**21.** A process for producing a laminated glass, which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by thermocompression bonding, down to 50°C at an average cooling rate of not less than 30°C/min but not more than 500°C/min.

**22.** A process for producing a laminated glass, which comprises a step of thermocompression bonding a plastic sheet and an inorganic glass sheet through an interposed interlayer film at a temperature exceeding 80°C but being less than 150°C, and a step of cooling the plastic sheet and the inorganic glass sheet heated by the thermocompression bonding, down to 40°C at an average cooling rate of not less than 30°C/min but not more than 500°C/min.

**23.** The process for producing a laminated glass according to any one of claims 20 to 22, wherein the interlayer film is a thermoplastic elastomer resin film.

**24.** The process for producing a laminated glass according to claim 23, wherein the thermoplastic elastomer resin film is a thermoplastic elastomer resin film having an average film thickness exceeding 2.0 mm but being less than 5.0 mm.

**25.** The process for producing a laminated glass according to claim 23 or 24, wherein the thermoplastic elastomer resin film is an ethylene-vinyl acetate copolymer resin film.

**26.** The process for producing a laminated glass according to claim 25, wherein the step of cooling at an average cooling rate of not less than 30°C/min but not more than 500°C/min comprises a step of cooling the plastic sheet and the inorganic glass sheet heated by thermocompression bonding, over the range from a temperature 10°C higher than the extrapolated end temperature of crystallization as measured in accordance with JIS K 7121 (1987) of the interlayer film resin, to a temperature 10°C lower than the extrapolated onset temperature of crystallization as measured in accordance with JIS K7121 (1987) at an average cooling rate of not less than 50°C/min but not more than 500°C/min.

**27.** The process for producing a laminated glass according to claim 23 or 24, wherein the thermoplastic elastomer resin film is an ethylene-acrylate copolymer resin film.

**28.** The process for producing a laminated glass according to claim 23 or 24, wherein the thermoplastic elastomer resin film is a polyurethane resin film which may contain sulfur element.

**29.** A laminated glass which is produced by the process according to any one of claims 20 to 28.

**30.** A laminated glass comprising a plastic sheet and an inorganic glass sheet, which are laminated through an interposed interlayer film by thermocompression bonding, wherein said interlayer film has an average thickness exceeding 2.0 mm but being less than 5.0 mm and the temperature at which the thermocompression bonding is carried out is higher than 80°C but less than 150°C.

**31.** The laminated glass according to claim 30, wherein the interlayer film is a thermoplastic elastomer resin film.

**32.** The laminated glass according to claim 31, wherein the thermoplastic elastomer resin film is an ethylene-vinyl acetate copolymer resin film.

**33.** The laminated glass according to claim 31, wherein the thermoplastic elastomer resin film is an ethylene-acrylate copolymer resin film.

**34.** The laminated glass according to claim 31, wherein the thermoplastic elastomer resin film is a polyurethane resin film which may contain sulfur element.

**INTERNATIONAL SEARCH REPORT**

International application No.
PCT/JP2006/316880

A. CLASSIFICATION OF SUBJECT MATTER
*B32B17/10*(2006.01)i, *B32B27/28*(2006.01)i, *C03C27/12*(2006.01)i

According to International Patent Classification (IPC) or to both national classification and IPC

B. FIELDS SEARCHED

Minimum documentation searched (classification system followed by classification symbols)
B32B1/00-43/00, C03C27/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 61-225271 A (Saint-Gobain Vitrage), 07 October, 1986 (07.10.86), Claims; page 3, upper left column, lines 4 to 6; page 4, lower left column, lines 8 to 11; page 5, upper right column, lines 15 to 17 & FR 2579611 A1 & US 4675237 A1 & EP 200589 A1 | 1,3,5,13,15, 16,18,19<br>4,15-18 |
| X<br>Y | JP 2004-114481 A (Nippon Sheet Glass Co., Ltd.), 15 April, 2004 (15.04.04), Claims; Par. Nos. [0008], [0010] (Family: none) | 19,29<br>15,16,18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 December, 2006 (05.12.06) | 19 December, 2006 (19.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

INTERNATIONAL SEARCH REPORT

International application No.
PCT/JP2006/316880

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-58612 A (Daito Kemitoronikusu Kabushiki Kaisha), 02 March, 1999 (02.03.99), Claim 1; Par. Nos. [0008], [0009], [0011] (Family: none) | 4,17 |
| Y | JP 2004-61914 A (Fuji Xerox Co., Ltd.), 26 February, 2004 (26.02.04), Par. No. [0023] & US 2004/71435 A1 | 17 |
| X<br>Y | JP 10-287451 A (Sekisui Chemical Co., Ltd.), 27 October, 1998 (27.10.98), Claim 1; Par. Nos. [0002], [0005], [0011], [0015], [0016], [0021]; table 1 (Family: none) | 20-23,25,26,29<br>24,27,28 |
| X<br>Y | JP 2000-154046 A (Nippon Shokubai Co., Ltd.), 06 June, 2000 (06.06.00), Claim 1; Par. Nos. [0040], [0060], [0082] (Family: none) | 30-34<br>24,27,28 |
| Y | Edited by The Society of Polymer Science, Japan, Kobunshi Jiten, 3rd edition, 30 June, 2005 (30.06.05), page 51 | 27 |
| Y | JP 2002-146330 A (3M Innovative Properties Co.), 22 May, 2002 (22.05.02), Par. No. [0010] & WO 2002/57387 A1 & US 2004/22984 A1 & EP 1332193 A | 28 |
| Y | JP 2002-226773 A (Dainippon Ink And Chemicals, Inc.), 14 August, 2002 (14.08.02), Par. No. [0015] & EP 1229062 A1 & US 6710137 B | 28 |
| Y | JP 2002-234926 A (Inoac Corp.), 23 August, 2002 (23.08.02), Par. No. [0012] (Family: none) | 28 |
| A | JP 2001-220183 A (Sekisui Chemical Co., Ltd.), 14 August, 2001 (14.08.01), Par. No. [0026] (Family: none) | 2 |
| A | JP 2002-180019 A (Bridgestone Corp.), 26 June, 2002 (26.06.02), Claims; Par. Nos. [0036], [0042]; Fig. 1 & WO 2002/49982 A1 & US 2003/111159 A1 & EP 1346962 A1 | 6-8,14 |

Form PCT/ISA/210 (continuation of second sheet) (April 2005)

INTERNATIONAL SEARCH REPORT

International application No.
PCT/JP2006/316880

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-9932 A (Tosoh Corp.), 18 January, 1994 (18.01.94), Par. No. [0007] (Family: none) | 9 |
| A | JP 2002-235049 A (Mitsubishi Plastics, Inc.), 23 August, 2002 (23.08.02), Par. No. [0018] (Family: none) | 10 |
| A | JP 4-261842 A (Sekisui Chemical Co., Ltd.), 17 September, 1992 (17.09.92), Par. No. [0006] (Family: none) | 11,12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11035349 A